# EUROPÄISCHE PATENTSCHRIFT

(11) **EP 3 502 511 B1**
(45) Veröffentlichungstag und Bekanntmachung des Hinweises auf die Patenterteilung: **08.07.2020**
(21) Anmeldenummer: 17210048.9
(22) Anmeldetag: 22.12.2017
(51) Int. Cl.: F16H 3/00, F16H 55/06, C08L 77/06, B29D 15/00, C08G 69/26, C08K 3/16, C08K 5/098, C08K 7/14, C08L 77/02, C08K 3/40, B29C 45/00

(54) **ZAHNRAD AUS EINER POLYAMID-FORMMASSE**
GEAR MADE OF A POLYAMIDE MOULDING MATERIAL
ROUE DENTÉE D'UNE MASSE DE FORMAGE EN POLYAMIDE

(43) Veröffentlichungstag der Anmeldung: 26.06.2019
(73) Patentinhaber: EMS-Patent AG, 7013 Domat/Ems (CH)
(72) Erfinder: STÖPPELMANN, Georg, CH-7402 Bonaduz (CH); JANISCH, Andreas, CH-7013 Domat/Ems (CH)
(74) Vertreter: Pfenning, Meinig & Partner mbB

(56) Entgegenhaltungen:
- EP-A1- 2 535 365
- DE-A1-102016 224 638
- MASAYA KUROKAWA ET AL: "Performance of plastic gear made of carbon fiber reinforced polyamide 12", WEAR, Bd. 254, Nr. 5-6, 1. März 2003 (2003-03-01), Seiten 468-473, XP055478952, CH ISSN: 0043-1648, DOI: 10.1016/S0043-1648(03)00020-6

## Beschreibung

Die vorliegende Erfindung betrifft ein Zahnrad, enthaltend eine spezifische Polyamid-Formmasse, die eine erhöhte Abriebfestigkeit aufweist, oder bestehend aus dieser Polyamid-Formmasse. Das Zahnrad weist einen Verzahnungsbereich und einen Kern- oder Schalenbereich auf, wobei vorzugsweise der komplette Verzahnungsbereich oder zumindest ein Teil davon aus der spezifischen Polyamid-Formmasse besteht.

Es ist bekannt, Zahnräder aus Kunststoff in verschiedenen Anwendungsbereichen der Getriebetechnik in Antriebs- und Kraftsträngen einzusetzen. Dabei ist es insbesondere wichtig, dass der Kunststoff eine hohe Abriebfestigkeit aufweist. Die zum Einsatz kommenden Kunststoffzahnräder weisen im Allgemeinen eine geringere Fähigkeit auf Leistungen zu übertragen als Zahnräder aus Metall. Dabei werden Kunststoffzahnräder entweder durch Gießverfahren hergestellt, oder die Zahnkonturen der Zahnräder werden aus Halbzeugen herausgearbeitet, z.B. durch Fräsen. Die Formen, die bei Spritzgießverfahren zum Einsatz kommen, weisen dabei im Allgemeinen die schlussendliche Zahnkontur auf, so dass die Zähne nicht weiter bearbeitet werden.

DE 10119 235 A1 betrifft ein Kunststoffzahnrad, umfassend einen Hauptkörperabschnitt und einen gezahnten Abschnitt. Der Hauptkörperabschnitt ist aus einem Verstärkungsfasern enthaltenden Kunstharz hergestellt. Der gezahnte Abschnitt ist aus einem Kunstharz hergestellt, welches das gleiche wie das Kunstharz des Hauptkörperabschnitts ist, mit dem Unterschied, dass es keine Verstärkungsfasern enthält. Weiterhin wird ein Spritzgießverfahren zur Herstellung eines derartigen Kunststoffzahnrades beschrieben, wobei das Spritzgiessen des Hauptkörper-Ausbildungsschritts bzw. des Zahnabschnitt-Ausbildungsschritts ausgeführt wird, nachdem der Hauptkörperabschnitt bzw. der gezahnte Abschnitt, welcher durch den jeweils anderen des Hauptkörperabschnitt-Ausbildungsschritts bzw. des Zahnabschnitt-Ausbildungsschritts erhalten wird, in einer Form angeordnet wurde. Ein solches zweistufiges Herstellverfahren für Zahnräder wird auch durch US 3,630,098 offenbart. Zusätzlich wird der Zahnbereich durch Zusätze wie z.B. Molybdänsulfid oder Teflon gleitmodifiziert, so dass solche Zahnräder auch ohne äussere Schmierung betrieben werden können.

Auch US 5,810,686 B1 beschreibt ein Zahnrad bei dem Kern- und Zahnbereich durch unterschiedliche Kunststoffformmassen gebildet werden, wobei nur der Kernbereich faserverstärkt ist.

US 6,274,074 B1 beschreibt ein Verfahren zur Herstellung eines Zahnrades bestehend aus einer harten äusseren Schicht und einer weichen, vibrationsdämpfenden Kernschicht in einem einstufigen Co-Injektionsverfahren. Beide Schichten können faserverstärkt sein.

Gemäß DE 10 2011 122 608 A1 soll die Genauigkeit der Verzahnung verbessert werden, wenn die Herstellung des Zahnrades durch Mehrkomponenten-Spritzguss erfolgt, wobei der Mehrkomponenten-Spritzguss derart ausgeführt wird, dass zuerst ein die Zahnradaußenwand bildender Kunststoff in den Hohlraum einer Form eingespritzt wird und darauf direkt folgend ein den Zahnradkern (das Zahnradinnere) bildender, sich aufblähender Kunststoff in den verbliebenen (restlichen) Hohlraum der Form eingespritzt wird.

Eine Variation des genannten Mehrkomponenten-Spritzgussverfahrens beschreibt DE 10 2013 220 800 B3 und zwar derart, dass das Getrieberad mehrere Anspritzstellen auf unterschiedlichen Teilkreisdurchmessern ausweist. Auch hier wird bevorzugt eine unverstärkte Formmasse für den Kern- oder Zahnbereich verwendet. In DE 10 2006 0236 568 A1 wird konkret Glasfaserverstärktes Polyamid PA66 für den Kernbereich und unverstärktes Polyamid PA66 für den Zahnbereich vorgeschlagen. Wesentlich für die Erfindung scheint zu sein, dass der E-Modul des Kernbereiches höher ist als derjenige des Zahnbereiches, weil dadurch Betriebsgeräusche reduziert werden könnten.

Die vorliegende Erfindung verfolgt die Aufgabenstellung ein Zahnrad mit sehr guter Abriebfestigkeit sowie mechanischer Beständigkeit bereitzustellen. Sofern der Kern- und Verzahnungsbereich aus verschiedenen Materialien bestehen, soll zwischen diesen Bereichen auch eine gute Verbundhaftung erreicht werden.

Diese Aufgabe wird durch das Zahnrad gemäß Anspruch 1 gelöst, welches die folgenden Merkmale aufweist.

Zahnrad enthaltend die Polyamid-Formmasse (I) oder bestehend aus dieser Polyamid-Formmasse, wobei die Polyamid-Formmasse (I) die folgenden Komponenten (A) bis (C) enthält oder aus diesen gebildet wird:
(A) 35 bis 100 Gew.-% einer Mischung gebildet aus den Polyamiden (A1) und (A2); wobei
   (A1) 50 bis 100 Gew.-% mindestens eines Polyamids enthaltend zu mindestens 50 Mol-% PA X.16-Einheiten, wobei X für ein acyclisches, aliphatisches Diamin mit 4 bis 12 Kohlenstoffatomen und 16 für 1,16-Hexadecandisäure steht, ist; und
   (A2) 0 bis 50 Gew.-% mindestens eines aliphatischen oder teilaromatischen Polyamids, welches verschieden von Komponente (A1), ist;
      wobei die Summe aus (A1) und (A2) 100 Gew.-% ergibt;
(B) 0 bis 60 Gew.-% mindestens eines Füllstoffes;
(C) 0 bis 5 Gew.-% mindestens eines Zusatzstoffes;
   wobei sich die Gewichtsanteile der Komponenten (A) bis (C) auf 100 Gew.-% ergänzen.

Bevorzugte Ausführungsformen des erfindungsgemäßen Zahnrads werden in den Ansprüchen 2 bis 14 angegeben.

Anspruch 14 betrifft ein Verfahren zur Herstellung des erfindungsgemäßen Zahnrads und Anspruch 15 betrifft spezifische Verwendungen dieses Zahnrads.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet.

### Mengenangaben

Die Polyamid-Formmassen gemäß der vorliegenden Erfindung enthalten die Komponenten (A) bis (C) bzw. (D) bis (F), es gilt dabei die Maßgabe, dass sich die Komponenten (A) bis (C) bzw. (D) bis (F) in Summe auf 100 Gew.-% ergänzen. Die festgelegten Bereiche der Mengenangaben für die einzelnen Komponenten (A) bis (C) bzw. (D) bis (F) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) bzw. (D) bis (F) 100 Gew.-% ergibt.

### C/N-Verhältnis

Das C- zu N-Verhältnis gemäß der vorliegenden Erfindung gibt das Verhältnis von Kohlenstoffatomen zu Stickstoffatomen im Polyamid an. Dabei werden auch die Kohlenstoffatome und Stickstoffatome, welche an der Bildung der Polyamid-Gruppe beteiligt sind berücksichtigt. Konkret ergibt sich das C/N-Verhältnis der jeweiligen Polyamid-Einheiten aus der Summe der Kohlenstoffatome (C) der Monomere, welche die Polyamid-Einheiten aufbauen, also den Dicarbonsäuren, Diaminen sowie Lactamen und Aminocarbonsäuren, in Bezug auf die Summe der Stickstoffatome (N) in diesen Monomeren, die im Polyamid zu Amidbindungen reagieren können. Enthält ein Polyamid mehrere Polyamideinheiten, wie beispielsweise PA 11/913 (30:70 mol-%), das die PA-Einheiten "11" und "913" umfasst, so werden die C/N-Verhältnisse der einzelnen PA-Einheiten gemäß ihrem Molanteil im Polyamid gewichtet. Für das Beispiel PA 11/913 (30:70 mol-%) resultiert somit ein C/N-Verhältnis von (0.3 * 11) + 0.7 ^{∗} (9 + 13) / 2 = 11.

### Teilkristalline Polyamide

Im Sinne der vorliegenden Erfindung sind teilkristalline Polyamide solche Polyamide, die in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von mehr als 4 J/g, besonders bevorzugt von wenigstens 20 J/g, ganz besonders bevorzugt von wenigstens 30 J/g aufweisen.

### Polyamid-Formmasse (I)

### Komponente (A)

Komponente (A) der Polyamid-Formmasse (I) ist eine Mischung aus den Komponenten (A1) und (A2). Komponente (A) ist in der Polyamid-Formmasse in 35 bis 100 Gew.-%, bevorzugt von 47 bis 90 Gew.-%, insbesondere von 58 bis 79,9 Gew.-% und besonders bevorzugt von 63 bis 74,9 Gew.-%, jeweils bezogen auf das Gesamtgewicht der Komponenten (A) bis (C), enthalten.

Gemäß einer bevorzugten Ausführungsform der vorliegenden Erfindung wird Komponente (A) aus 50 bis 90 Gew.-% und bevorzugt 60 bis 85 Gew.-% Komponente (A1) und 10 bis 50 Gew.-% und bevorzugt 15 bis 40 Gew.-% Komponente (A2) gebildet, wobei die Summe aus (A1) und (A2) 100 Gew.-% (A) ergibt.

Eine andere bevorzugte Ausführungsform sieht vor, dass Komponente (A) ausschließlich aus Komponente (A1) gebildet wird.

Im Folgenden werden die Komponenten (A1) und (A2) näher definiert.

### Komponente (A1)

Der Anteil von Komponente (A1) liegt vorzugsweise im Bereich von 50 bis 90 Gew.-%, besonders bevorzugt im Bereich von 60 bis 85 Gew.-% und insbesondere bei 100 Gew.-%, jeweils bezogen auf die Komponente (A).

Weiterhin gilt für die Komponente (A1), dass vorzugsweise ein C/N-Verhältnis im Bereich von 10.5 bis 12.5 und insbesondere bevorzugt im Bereich von 11 bis 12 vorliegt.

Gemäß einer bevorzugten Ausführungsform besteht Komponente (A1) aus mindestens einem Polyamid, enthaltend 60 oder 80 Mol-% und insbesondere 100 Mol-% mindestens eine Polyamid-Einheit X16, wobei X für ein acyclisches, aliphatisches Diamin mit 4 bis 12 Kohlenstoffatomen und 16 für 1,16-Hexadecandisäure steht. Das bedeutet das mindestens eine aliphatische Polyamid der Komponente (A1) kann weitere aliphatische Polyamid-Einheiten verschieden von X.16 in Mengen bis zu 40 Mol-% oder bis zu 20 Mol-% enthalten. Bevorzugt handelt es sich bei den weiteren Polyamideinheiten um die Polyamid-Einheiten 610, 612, 614, 618, 1010, 1012, 1212, 1014, 1018, 912 und 914 und 918, insbesondere um 612 und 614, solange das oben definierte C/N-Verhältnis eingehalten wird.

Besonders bevorzugt handelt es sich bei Komponente (A1) um ein aliphatisches Polyamid ausgewählt aus der Gruppe PA516, PA616, PA916, PA1016, PA616/1016, PA616/614, PA616/612, PA616/610, PA616/916, PA916/1016 und PA516/616 oder eine Mischung dieser Systeme oder um die Polyamide PA616, PA616/1016 oder PA1016.

Nach einer weiteren bevorzugten Ausführungsform besteht die Komponente (A1) aus mindestens einem acyclischen, aliphatischen Polyamid gebildet ausschließlich aus PA-Einheiten X.16, wie oben definiert.

Gemäß einer anderen bevorzugten Ausführungsform ist Komponente (A1) ein acyclisches, aliphatisches Polyamid ausgewählt aus der Gruppe bestehend aus PA1016, PA916, PA516, PA616, PA516/616, PA616/916, PA616/1016, PA616/618 und Mischungen hiervon.

Gemäß einer weiteren bevorzugten Ausführungsform ist Komponente (A1) ausgewählt aus der Gruppe bestehend aus PA616, PA516, PA916, PA1016, PA516/616, PA616/1016 und Mischungen hiervon, insbesondere PA616.

Nach einer weiteren bevorzugten Ausführungsform ist die relative Viskosität von Komponente (A1) im Bereich von 1,6 bis 3,0, bevorzugt von 1,7 bis 2,7 und bevorzugt von 1,80 bis 2,40. Die relative Viskosität wird dabei bei 20 °C gemessen nach ISO 307 (2007) in einer Lösung von 0,5 g Polymer in 100 ml m-Kresol.

Eine weitere bevorzugte Ausführungsform ist dadurch gekennzeichnet, dass Komponente (A1) entweder ein ausgeglichenes Endgruppenverhältnis aufweist, d.h. die Differenz zwischen Amino- und Carboxyl-Endgruppen beträgt höchstens 15 mmol/kg, insbesondere höchstens 10 mmol/kg oder, dass die Amino- oder die Carboxyl-Endgruppen im Überschuss vorliegen, wobei die Konzentration der Aminoendgruppen vorzugsweise im Bereich von 20 bis 120 mmol/kg, besonders bevorzugt im Bereich von 30 bis 100 mmol/kg und insbesondere im Bereich von 30 bis 70 mmol/kg liegt und/oder wobei die Konzentration der Carboxyl-Endgruppen vorzugsweise im Bereich von 0 bis 120 mmol/kg, bevorzugt im Bereich von 5 bis 100 mmol/kg und ganz besonders bevorzugt im Bereich von 10 bis 80 mmol/kg liegt. Die Differenz zwischen Amino- und Carboxyl-Endgruppen beträgt dabei wenigstens 20 mmol/kg, bevorzugt wenigstens 25 mmol/kg und insbesondere wenigstens 30 mmol/kg. Insbesondere bevorzugt ist ein Aminoendgruppenüberschuss.

Für Zahnräder die nur aus einem Material bestehen ist es bevorzugt, dass Komponente (A1) nicht Polyamid PA12 ist. Eine besonders bevorzugte Komponente (A1) für Zahnräder, die nur aus einem einzigen Material bestehen ist Polyamid PA 616, dabei ist es insbesondere bevorzugt, dass Komponente (A) zu 100 Gew.-% aus Komponente (A1) besteht.

### Komponente (A2)

Komponente (A2) ist mindestens ein aliphatisches Polyamid oder teilaromatisches Polyamid, welches von Komponente (A1) verschieden ist.

Gemäß einer bevorzugten Ausführungsform ist Komponente (A2) ein aliphatisches oder teilaromatisches Polyamid gebildet aus aliphatischen Diaminen mit 4 bis 12, bevorzugt 6 bis 10 Kohlenstoffatomen, aliphatischen Dicarbonsäuren mit 6 bis 12, bevorzugt 6 bis 10 Kohlenstoffatomen und aromatischen Dicarbonsäuren, insbesondere Terephthalsäure und Isophthalsäure.

Nach einer weiteren bevorzugten Ausführungsform ist Komponente (A2) ausgewählt aus der Gruppe bestehend aus PA6, PA46, PA56, PA66, PA6/66, PA69, PA610, PA612, PA96, PA910, PA106, PA109, PA6T/66, PA6T/6I, PA6T/6I/610, PA6T/6I/612, PA6T/6I/614, PA6T/6I/616, PA6T/DT (D = 2-Methylpentan-1,5-diamin), PA6T/6I/66, PA6T/6, PA6T/10T, PA9T, PA9T/MT (M = 2-Methyloctan-1,8-diamin), PA10T, PA12T, PA10T/610, PA10T/612, PA10T/614, PA10T/616, PA10T/618, PA10T/916, PA10T/1016 und Mischungen hiervon.

Eine weitere bevorzugte Ausführungsform sieht vor, dass Komponente (A2) ausgewählt ist aus der Gruppe bestehend aus PA66, PA610, PA612, PA106, PA6T/6I, PA6T/6I/610, PA6T/6I/612, PA6T/6I/614, PA6T/6I/616, PA6T/10T, PA10T/610, PA10T/612, PA10T/614, PA10T/616, PA10T/618, PA10T/1016 und Mischungen hiervon.

Gemäß einer anderen bevorzugten Ausführungsform vorliegender Erfindung ist Komponente (A2) ausgewählt aus der Gruppe bestehend aus PA610, PA612, PA10T/1016, PA10T/612 und Mischungen hiervon.

Nach einer bevorzugten Ausführungsform weist Komponente (A2) eine relative Viskosität von 1,5 bis 2,7, bevorzugt von 1,6 bis 2,4 und besonders bevorzugt von 1,70 bis 2,20 auf. Die relative Viskosität wird dabei bei 20°C gemessen nach ISO 307 (2007) in einer Lösung von 0,5 g Polymer in 100 ml m-Kresol.

### Komponente (B)

Komponente (B) ist ein Füllstoff, der in 0 bis 60 Gew.-% in der Polyamid-Formmasse (I) enthalten ist. Die Füllstoffe können sowohl faserförmig wie teilchenförmig, einzeln oder im Gemisch, vorliegen.

Gemäß einer bevorzugten Ausführungsform vorliegender Erfindung ist Komponente (B) mit 10 bis 50 Gew.-%, bevorzugt mit 20 bis 40 Gew.-% und besonders bevorzugt mit 22 bis 37 oder 25 bis 35 Gew.-% in der Polyamid-Formmasse (I) enthalten, wobei sich diese Mengenangaben auf die Summe der Komponenten (A) bis (C) bzw. das Gesamtgewicht der Polyamid-Formmasse (I) beziehen.

Die Komponente (B) kann sowohl faserförmige Verstärkungsmittel als auch weitere partikuläre Füllstoffe enthalten. Insbesondere wird bevorzugt, wenn (B) ausschließlich aus faserförmigen Verstärkungsmitteln, ausgewählt aus der Gruppe bestehend aus Glasfasern, Kohlenstofffasern, Borfasern, Aramidfasern, Basaltfasern und Mischungen davon, besteht.

Gemäß einer bevorzugten Ausführungsform der erfindungsgemäßen Polyamid-Formmasse wird die Komponente (B) vollständig aus Glasfasern gebildet.

Die verwendeten Glasfasern besitzen eine Querschnittsfläche, die entweder kreisförmig (oder synonym rund) oder nicht-kreisförmig (oder synonym flach) ist, wobei im letzteren Fall das Abmessungsverhältnis von der Haupt-Querschnittsachse zur Neben-Querschnittsachse mindestens 2, z.B. von 2.5 bis 4.5 beträgt.

Die Verstärkung mit Glasfasern kann mit Kurzfasern (z.B. Schnittglas mit einer Länge von 2 bis 50 mm) oder Endlosfasern (Langglas oder Rovings) erfolgen.

In einer bevorzugten Ausführungsform sind die erfindungsgemäß eingesetzten Glasfasern Kurzglasfasern mit einem Durchmesser im Bereich von 6 bis 20 und bevorzugt von 9 bis 12 µm. Die Glasfasern liegen in Form von Schnittglas mit einer Länge von 2 bis 50 mm vor. Insbesondere werden erfindungsgemäß E-und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

In einer weiteren bevorzugten Ausführungsform sind die eingesetzten Glasfasern Langglasfasern (Rovings, Endlosglasfasern). Die als Roving eingesetzten Glasfasern weisen einen Durchmesser von 10 bis 20 µm, bevorzugt von 12 bis 17 µm auf. Insbesondere werden E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E- und/oder S-Glasfasern eingesetzt werden.

Bei den flachen Glasfasern, also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2, bevorzugt von 2.5 bis 4.5, insbesondere von 3 bis 4 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebenden Rechteck zu mindestens 70 %, bevorzugt mindestens 80 % und insbesondere bevorzugt zu mindestens 85 % aus.

Zur Verstärkung der erfindungsgemäßen Formmassen können auch Mischungen von Glasfasern mit kreisförmigem und nicht-kreisförmigem Querschnitt verwendet werden, wobei der Anteil an flachen Glasfasern bevorzugtermaßen überwiegt, d.h. mehr als 50 Gew.-% der Gesamtmasse der Fasern ausmacht. Die Glasfasern können mit einer für Thermoplaste, insbesondere für Polyamid geeigneten Schlichte, enthaltend einen Haftvermittler auf Basis einer Amino- oder Epoxysilanverbindung, versehen sein.

Die flachen Glasfasern der Komponente (B) sind dabei z.B. bevorzugt als E-Glasfasern gemäß ASTM D578-00 mit nicht-kreisförmigem Querschnitt ausgewählt, vorzugsweise aus 52 bis 62 % Siliciumdioxid, 12 bis 16 % Aluminiumoxid, 16 bis 25 % Calciumoxid, 0 bis 10 % Borax, 0 bis 5 % Magnesiumoxid, 0 bis 2 % Alkalioxide, 0 bis 1.5 % Titandioxid und 0 bis 0.3 % Eisenoxid. Die Glasfasern der Komponente (B) weisen bevorzugt als flache E-Glasfasern eine Dichte von 2.54 bis 2.62 g/cm³, einen Zug-E-Modul von 70 bis 75 GPa, eine Zugfestigkeit von 3000 bis 3500 MPa und eine Reißdehnung von 4.5 bis 4.8 % auf, wobei die mechanischen Eigenschaften an Einzelfasern mit einem Durchmesser von 10 µm und eine Länge von 12.7 mm bei 23°C und einer relativen Luftfeuchte von 50 % bestimmt wurden.

Die Komponente (B) kann des weiteren Füllstoffe, gegebenenfalls in oberflächenbehandelter Form enthalten, ausgewählt aus der folgenden Gruppe: Kaolin, calciniertes Kaolin, Talkum, Talk, Glimmer, Silikat, Quarz, Titandioxid, Wollastonit, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Als Füllstoff können die erfindungsgemäßen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

Eine bevorzugte Ausführungsform der Polyamid-Formmasse nach der Erfindung zeichnet sich dadurch aus, dass die Komponente (B) im Bereich von 15 bis 40 Gew.-%, bevorzugt im Bereich von 20 bis 40 Gew.-%, weiter bevorzugt von 25 bis 35 Gew.-%, insbesondere bevorzugt in Form von Glasfasern mit nicht-kreisförmigem Querschnitt und einem Abmessungsverhältnis von der Haupt-Querschnittsachse zur Neben-Querschnittsachse im Bereich von 2.5 bis 4.5, vorliegt.

Gemäß einer bevorzugten Ausführungsform vorliegender Erfindung besteht Komponente (B) ausschliesslich aus einem Glasfüller ausgewählt aus der Gruppe bestehend aus Glasfasern, gemahlenen Glasfasern, Glaspartikeln, Glas-Flakes, Glas-Kugeln, Glas-Hohlkugeln oder aus Kombinationen aus den vorgenannten. Werden als Komponente (B) Glaskugeln oder Glaspartikel ausgewählt, beträgt deren mittlerer Durchmesser 0,3 bis 100 µm, bevorzugt 0,7 bis 30 µm, besonders bevorzugt 1 bis 10 µm.

Eine andere bevorzugte Ausführungsform der vorliegenden Erfindung sieht vor, dass die Glassorte von Komponente (B) ausgewählt ist aus der Gruppe bestehend aus E-Glas, ECR-Glas, S-Glas, A-Glas, AR-Glas und R-Glas, insbesondere E- und S-Glas, sowie Mischungen aus diesen Glassorten.

Bei Komponente (B) handelt es sich gemäß einer bevorzugten Ausführungsform um eine hochfeste Glasfaser oder sogenannte S-Glasfaser. Diese beruht vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid, wobei eine Zusammensetzung von 58 bis 70 Gew.-% Siliciumdioxid (SiO₂), 15 bis 30 Gew.-% Aluminiumoxid (Al₂O₃), 5 bis 15 Gew.-% Magnesiumoxid (MgO), 0 bis 10 Gew.-% Calciumoxid (CaO) und 0 bis 2 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid oder Lithiumoxid (Li₂O) bevorzugt wird.

Nach einer weiteren bevorzugten Ausführungsform besitzt die hochfeste Glasfaser eine Zusammensetzung von 60 bis 67 Gew.-% Siliciumdioxid (SiO₂), 20 bis 28 Gew.-% Aluminiumoxid (Al₂O₃), 7 bis 12 Gew.-% Magnesiumoxid (MgO), 0 bis 9 Gew.-% Calciumoxid (CaO) sowie 0 bis 1,5 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid Lithiumoxid (Li₂O).

Insbesondere bevorzugt ist es, wenn die hochfeste Glasfaser die nachfolgende Zusammensetzung aufweist: 62 bis 66 Gew.-% Siliciumdioxid (SiO₂), 22 bis 27 Gew.-% Aluminiumoxid (Al₂O₃), 8 bis 12 Gew.-% Magnesiumoxid (MgO), 0 bis 5 Gew.-% Calciumoxid (CaO), 0 bis 1 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid und Lithiumoxid (Li₂O).

Die hochfesten Glasfasern (S-Glasfasern) weisen bevorzugtermaßen eine Zugfestigkeit von wenigstens 3700 MPa, vorzugsweise von wenigstens 3800 oder 4000 MPa, und/oder eine Reißdehnung von wenigstens 4,8 %, vorzugsweise von wenigstens 4,9 oder 5,0 % und/oder einen Zug-E-Modul von mehr als 75 GPa, vorzugsweise von mehr als 78 oder 80 GPa auf, wobei diese Glaseigenschaften an Einzelfasern (pristine single filaments) mit einem Durchmesser von 10 µm und eine Länge von 12,7 mm bei einer Temperatur von 23°C und einer relativen Luftfeuchte von 50 % zu bestimmen sind.

Konkrete Beispiele für diese hochfesten Glasfasern sind S-Glasfasern von Owens Corning mit 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die oben genannten Glasfasern können in Form von Kurzfasern, bevorzugt in Form von Schnittglas, mit einer Länge im Bereich von 0,2 bis 20 mm, oder in Form von Endlosfasern vorliegen. Weiterhin weisen die Glasfasern bevorzugt eine kreisförmige oder nicht-kreisförmige Querschnittsfläche auf.

Glasfasern mit kreisförmigem Querschnitt, also runde Glasfasern, haben typischerweise einen Durchmesser im Bereich von 5 bis 20 µm, bevorzugt im Bereich von 6 bis 17 µm und besonders bevorzugt im Bereich von 6 bis 13 µm. Sie werden bevorzugt als Kurzglasfaser (Schnittglas mit einer Länge von 0.2 bis 20 mm, bevorzugt 2 bis 12 mm) eingesetzt.

### Komponente (C)

Die erfindungsgemäße Polyamid-Formmasse (I) enthält 0 bis 5 Gew.-% mindestens eines Zusatzstoffes als Komponente (C).

Gemäß einer bevorzugten Ausführungsform enthält die erfindungsgemäße Polyamid-Formmasse (I) 0 bis 3 Gew.-% und bevorzugt 0.1 bis 2.0 Gew.-% mindestens eines Zusatzstoffes als Komponente (C).

Nach einer bevorzugten Ausführungsform ist Komponente (C) ausgewählt aus der Gruppe bestehend aus Schmiermitteln, Wärmestabilisatoren, Verarbeitungsstabilisatoren, Verarbeitungshilfsmittel, Viskositätsmodifikator, Oxidationsverzögerern, Mitteln gegen Wärmezersetzung und Zersetzung durch ultraviolettes Licht, Gleit- und Entformungsmitteln, Färbemitteln, insbesondere Farbstoffen und Pigmenten, Keimbildungsmitteln, Weichmachern, anorganischen Pigmenten, organischen Pigmenten und Mischungen davon.

Nach einer besonders bevorzugten Ausführungsform enthält die Polyamid-Formmasse (I) als Komponente (C) mindestens ein Schmiermittel, wobei dieses bevorzugt in einem Anteil von 0 bis 2 Gew.-% , insbesondere bevorzugt von 0,05 bis 2.0 Gew.-%, besonders bevorzugt von 0,1 bis 1,5 Gew.-% und am bevorzugtesten von 0,1 bis 1,0 Gew.-%, jeweils bezogen auf das Gesamtgewicht der Komponenten (A) bis (C), enthalten ist.

Hierbei bevorzugt sind Al-, Alkali-, Erdalkalisalze, Ester oder Amide von Fettsäuren mit 10 bis 44 C-Atomen und vorzugsweise mit 14 bis 44 C-Atomen, wobei die Metallionen Na, Mg, Ca und Al bevorzugt und Ca oder Mg besonders bevorzugt sind. Besonders bevorzugte Metallsalze sind Ca-Stearat und Ca-Montanat sowie Al-Stearat. Die Fettsäuren können 1- oder 2-wertig sein. Als Beispiele seien Pelargonsäure, Palmitinsäure, Laurinsäure, Margarinsäure, Dodecandisäure, Behensäure und die besonders bevorzugten Stearinsäure, Caprinsäure sowie Montansäure (Mischung von Fettsäuren mit 30 bis 40 C-Atomen), genannt.

Weiterhin sind aliphatischen Alkohole, die 1- bis 4-wertig sein können, als Schmiermittel bevorzugt. Bevorzugt sind diese Alkohole ausgewählt aus der Gruppe bestehend aus n-Butanol, n-Octanol, Stearylalkohol, Ethylenglykol, Propylenglykol, Neopentylglykol, Glycerin, Pentaerythrit und Mischungen daraus, wobei Glycerin und Pentaerythrit bevorzugt sind.

Außerdem sind aliphatische Amine, die 1- bis 3-wertig sein können, bevorzugte Schmiermittel. Bevorzugte Amine sind ausgewählt aus der Gruppe bestehend aus Stearylamin, Ethylendiamin, Propylendiamin, Hexamethylendiamin, Di(6-Aminohexyl)amin und Mischungen hiervon, wobei Ethylendiamin und Hexamethylendiamin besonders bevorzugt sind.

Bevorzugte Ester oder Amide von Fettsäuren sind ausgewählt aus der Gruppe bestehend aus Glycerindistearat, Glycerintristearat, Ethylendiamindistearat, Glycerinmonopalmitat, Glycerintrilaurat, Glycerinmonobehenat, Pentaerythrittetrastearat und Mischungen hiervon.

Nach einer weiteren bevorzugten Ausführungsform enthält die Polyamid-Formmasse (I) als Komponente (C) mindestens einen Wärmestabilisator, wobei dieses bevorzugt in einem Anteil von 0 bis 3 Gew.-% , insbesondere bevorzugt von 0,02 bis 2,0 Gew.-% und besonders bevorzugt von 0,1 bis 1,5 Gew.-%, jeweils bezogen auf das Gesamtgewicht der Komponenten (A) bis (C), enthalten ist.

Gemäß einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten (A) bis (C).

Die Kupferverbindungen sind handelsüblich bzw. ihre Herstellung ist dem Fachmann bekannt. Die Kupferverbindungen können als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen,
- Stabilisatoren auf Basis sterisch gehinderter Phenole, wobei diese Stabilisatoren vorzugsweise in einer Menge von 0,1 bis 1,5, bevorzugt von 0,2 bis 1,0 Gew.-% vorliegen, und
- Phosphiten und Phosphoniten, sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Als sterisch gehinderte Phenole eignen sich prinzipiell alle Verbindungen mit phenolischer Struktur, die am phenolischen Ring mindestens eine sterisch anspruchsvolle Gruppe aufweisen. Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec NC66 von Ciba Spez. GmbH. Insbesondere bevorzugt ist eine Wärmestabilisierung ausschließlich auf Basis von CuI und KI.

Nach einer weiteren bevorzugten Ausführungsform enthält die Polyamid-Formmasse (I) als Komponente (C) mindestens einen Viskositätsmodifikator, wobei dieses bevorzugt in einem Anteil von 0.1 bis 5 Gewichtsprozent, bevorzugt in 0.1 bis 3 Gewichtsprozent und besonders bevorzugt in 0.2 bis 2 Gewichtsprozent bezogen auf das Gesamtgewicht der Komponenten (A) bis (C), vorliegt.

Die erfindungsgemässe Polyamid-Formmasse (I) enthält vorzugsweise des Weiteren einen Viskositätsmodifikator (Komponente C), welcher bei der thermoplastischen Verarbeitung zu einem Molekulargewichtsaufbau durch Kettenverlängerung der Polyamidmolekülen in den Komponenten (A1) und (A2) führt. Eine bevorzugte Variante eines Viskositätsmodifikators ist ein Polycarbonat in einem säureterminierten Polyamid. Ein solcher Viskositätsmodifikator ist beispielsweise unter der Bezeichnung Brüggolen® M 1251 von der Firma Brüggemann Chemical (Deutschland) im Handel erhältlich, wobei es sich um ein Masterbatch aus einem niedrigviskosen Polycarbonat in einem säureterminierten Polyamid 6 handelt. Eine andere bevorzugte Variante eines Viskositätsmodifikators ist ein acrylsäuremodifiziertes Polyethylen hoher Dichte, vorzugsweise mit einem Pfropfgrad im Bereich von 5 bis 6 %. Ein solcher Polymer-Modifikator wird beispielsweise von der Firma Chemtura unter dem Handelsnamen Polybond 1009 vertrieben und weist einen Pfropfgrad von 6 % auf. Ebenfalls können Poly(ethylen-maleinsäureanhydrid)-copolymere verwendet werden.

Weitere bevorzugte Viskositätsmodifikatoren sind aromatische Polycarbodiimide, welche z.B. von der Firma Rhein-Chemie (Deutschland) unter dem Namen Stabaxol® P vertrieben werden. Andere bevorzugte Viskositätsmodifikatoren sind acrylsäuremodifizierte lineare Polyethylene niedriger Dichte, wie z.B. das von der Firma OKA-Tec angebotene Okabest® 2400. Weitere bevorzugte Viskositätsmodifikatoren sind 1,1'-Carbonyl-bis-caprolactamate, welche z.B. von der Firma DSM unter dem Namen Allinco® CBC vertrieben werden, sowie Bisoxazoline, wie z.B. 1,4-Phenylen-bis-(2-oxazolin).

Weiterhin kann die erfindungsgemäße Polyamid-Formmasse (I) als Komponente (C) übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht der Komponenten (A) bis (C) genannt.
Als UV-Stabilisatoren, die im Allgemeinen in Mengen bis zu 2 Gew.-%, bezogen auf das Gewicht der Polyamid-Formmasse (I), verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Kaolin, Talk, Aluminiumoxid, Alumosilikat, Siliziumdioxid sowie bevorzugt Talkum eingesetzt werden.

### Bevorzugte Polyamid-Formmassen (I)

Im Folgenden werden bevorzugte Polyamid-Formmassen (I) angegeben.

Eine bevorzugte Polyamid-Formmasse (I) enthält die folgenden Komponenten (A) bis (C) und wird besonders bevorzugt aus diesen gebildet:
(A) 47 bis 90 Gew.-% mindestens eines teilkristallinen, aliphatischen Polyamids (A1) ausgewählt aus der Gruppe bestehend aus PA616, PA1016und Mischungen davon;
(B) 10 bis 50 Gew.-% mindestens eines Füllstoffes;
(C) 0 bis 3 Gew.-% mindestens eines Zusatzstoffes;
wobei sich die Gewichtsanteile der Komponenten (A) bis (C) auf 100 Gew.-% ergänzen.
Eine weitere bevorzugte Polyamid-Formmasse (I) enthält die folgenden Komponenten (A) bis (C) und wird besonders bevorzugt aus diesen gebildet:
(A) 87 bis 90 Gew.-% mindestens eines teilkristallinen, aliphatischen Polyamids (A1) ausgewählt aus der Gruppe bestehend aus PA616, PA1016 und Mischungen davon;
(B) 0 bis 10 Gew.-% mindestens eines Füllstoffes;
(C) 0 bis 3 Gew.-% mindestens eines Zusatzstoffes;
wobei sich die Gewichtsanteile der Komponenten (A) bis (C) auf 100 Gew.-% ergänzen.

Weiterhin weist die Polyamid-Formmasse (I) bevorzugt
- eine Bruchfestigkeit bestimmt nach ISO 527 von mindestens 50 MPa, bevorzugt mindestens 80 MPa und besonders bevorzugt mindestens 100 MPa auf; und/oder
- eine Bruchddehnung bestimmt nach ISO 527 von mindestens 4 %, bevorzugt mindestens 5 % und besonders bevorzugt mindestens 6 % auf; und/oder
- einen Zug-E-Modul bestimmt nach ISO 527 von mindestens 1000 MPa, bevorzugt mindestens 4000 MPa und besonders bevorzugt mindestens 6000 MPa auf; und/oder
- eine Charpy-Schlagzähigkeit bei 23°C bestimmt nach ISO 179/2eA von mindestens 60 kJ/m², bevorzugt mindestens 70 kJ/m² und besonders bevorzugt mindestens 80 kJ/m² auf; und/oder
- einen Abrieb bestimmt am angussfernen Teil eines ISO-Zugstabs (Typ A1, Masse 170 x 20/10 x4), der mit einer Geschwindigkeit von 3 m/min bei 23°C über eine Stahlplatte bewegt wird (Auflagefläche 20 x 4 mm²) nach 8 Stunden von maximal 1 mg, bevorzugt von maximal 0,9 mg und besonders bevorzugt von maximal 0,8 mg, auf.

### Polyamid-Formmasse (II)

Die Polyamid-Formmasse (II) enthält gemäß einer bevorzugten Ausführungsform die folgenden Komponenten (D) bis (F) und wird besonders bevorzugt aus diesen gebildet.
(D) 35 bis 100 Gew.-%, bevorzugt 47 bis 80 Gew.-% mindestens eines aliphatischen oder teilaromatischen Polyamids, bevorzugt gebildet aus aliphatischen Diaminen mit 4 bis 12, besonders bevorzugt 6 bis 10 Kohlenstoffatomen, aliphatischen Dicarbonsäuren mit 6 bis 12, bevorzugt 6 bis 10 Kohlenstoffatomen und aromatischen Dicarbonsäuren, insbesondere Terephthalsäure und Isophthalsäure;
(E) 0 bis 60 Gew.-%, bevorzugt 20 bis 50 Gew.-% mindestens eines Füllstoffes;
(F) 0 bis 5 Gew.-%, bevorzugt 0 bis 3 Gew.-% mindestens eines Zusatzstoffes;
wobei sich die Gewichtsanteile der Komponenten (D) bis (F) auf 100 Gew.-% ergänzen.

Gemäß einer besonders bevorzugten Ausführungsform liegt die relative Viskosität von Komponente (D) im Bereich von 1,5 bis 3,0, bevorzugt von 1,6 bis 2,7 und bevorzugt von 1,65 bis 2,40. Die relative Viskosität wird dabei bei 20°C gemessen nach ISO 307 (2007) in einer Lösung von 0,5 g Polymer in 100 ml m-Kresol.

Gemäß einer anderen bevorzugten Ausführungsform ist die Komponente (D) ein aliphatisches Homopolyamid ausgewählt aus der Gruppe bestehend aus PA66, PA6, PA6I/6T, insbesondere amorph, PA66/6 und Mischungen daraus.

Nach einer bevorzugten Ausführungsform ist das Polyamid der Komponente (D) ausgewählt aus der Gruppe bestehend aus PA6, PA66, PA6/66, PA46, PA56, PA510, PA610, PA612, PA6T/6I, PA6T/66, PA6T/DT (D = 2-Methylpentan-1,5-diamin), PA6T/10T, PA9T, PA9T/MT (M = 2-Methyloctan-1,8-diamin), PA10T, PA11/10T, PA12/10T, PA10T/66, PA10T/106, PA10T/610, PA10T/612 und Mischungen davon.

Gemäß einer anderen bevorzugten Ausführungsform ist das Polyamid der Komponente (D) ausgewählt aus der Gruppe bestehend aus PA6, PA66, PA6/66, PA6T/6I, PA6T/66, PA6T/10T, PA10T/612 und Mischungen davon, bevorzugt als PA66 oder aus Mischungen aus PA66 und PA6T/6I.

Die Komponenten (E) und (F) sind bevorzugt die für Polyamid-Formmasse (I) bereits als Komponente (B) bzw. (C) definierten Stoffe.

Eine bevorzugte Polyamid-Formmasse (II) enthält die folgenden Komponenten (D) bis (F) und besteht bevorzugt aus diesen Komponenten:
(D) 85 bis 100 Gew.-% eines Polyamids ausgewählt aus der Gruppe bestehend aus PA 66, PA6I/6T und Mischungen daraus;
(E) 0 bis 10 Gew.-% mindestens eines Füllstoffes;
(F) 0 bis 5 Gew.-% mindestens eines Zusatzstoffes;
wobei sich die Gewichtsanteile der Komponenten (D) bis (F) auf 100 Gew.-% ergänzen.

Eine andere bevorzugte Polyamid-Formmasse (II) enthält die folgenden Komponenten (D) bis (F) und besteht bevorzugt aus diesen Komponenten:
(D) 45 bis 80 Gew.-% eines Polyamids ausgewählt aus der Gruppe bestehend aus PA 66, PA6I/6T und Mischungen daraus;
(E) 20 bis 50 Gew.-% mindestens eines Füllstoffes;
(F) 0 bis 5 Gew.-% mindestens eines Zusatzstoffes;
wobei sich die Gewichtsanteile der Komponenten (D) bis (F) auf 100 Gew.-% ergänzen.

### Zahnrad

Das erfindungsgemäße Zahnrad kann ausschließlich aus der oben definierten Polyamid-Formmasse (I) bestehen.

Gemäß einer bevorzugten Ausführungsform weist das erfindungsgemäße Zahnrad einen Verzahnungsbereich und einen Kern- oder Schalenbereich auf, wobei der komplette Verzahnungsbereich oder zumindest ein Teil davon aus der Polyamid-Formmasse (I) besteht. Wenn nur ein Teil des Verzahnungsbereichs aus der Polyamid-Formmasse (I) besteht, ist es bevorzugt, dass dieser Teil als Verschleißschicht ausgebildet ist, die sich bevorzugt über die komplette Außenseite des Verzahnungsbereichs erstreckt. Der Kern- oder Schalenbereich enthält entweder die Polyamid-Formmasse (I) oder eine von der Polyamid-Formmasse (I) verschiedene Polyamid-Formmasse (II) oder besteht aus diesen. Es ist dabei insbesondere bevorzugt, dass der Kern- oder Schalenbereich aus der Polyamid-Formmasse (II) besteht.

Gemäß einer bevorzugten Ausführungsform der vorliegenden Erfindung weist das Zahnrad neben dem Verzahnungsbereich und dem Kern- oder Schalenbereich noch eine weitere Schicht auf, die besonders bevorzugt ausgewählt ist aus einem thermoplastischen Kunststoff ausgewählt aus der Gruppe bestehend aus Polyamid, Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, Flüssigkristalline Polymere, Polyetherketon, Polyetheretherketon, Polyimid, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme.

Eine andere bevorzugte Ausführungsform sieht vor, dass
- das Zahnrad von 5 bis 100, bevorzugt 20 bis 80 und insbesondere bevorzugt von 55 bis 66 Zähne aufweist; und/oder
- der Modul (Normal-, Stirn-, Axial-) des Zahnrads von 0.1 bis 10 mm, bevorzugt 0,5 bis 5 mm und besonders bevorzugt von 1 bis 3 mm beträgt; und/oder
- die Zahnbreite von 1 bis 20 mm, bevorzugt von 2 bis 15 mm und besonders bevorzugt von 4 bis 12 mm beträgt.

Die Anordnung der einzelnen Bereiche des Zahnrades ist dabei bevorzugt so, dass der Verzahnungsbereich die Außenseite bildet und neben den Zähnen selbst noch einen Abschnitt aufweist an dem die Zähne befestigt sind. Der Kern- oder Schalenbereich ist innen und bevorzugt direkt benachbart zum Verzahnungsbereich angeordnet. Sofern keine weitere Schicht vorhanden ist, bildet der Kern- oder Schalenbereich die innerste Schicht. Ist eine weitere Schicht enthalten, so bildet diese bevorzugt die innerste Schicht.

Bei den erfindungsgemäßen Zahnrädern kann es sich um Zahnräder ausgewählt aus der Gruppe bestehend aus geradverzahnten Stirnzahnrädern, innen- und aussenverzahnten Zahnrädern, schrägverzahnten Zahnrädern, Kegelzahnrädern, Schneckenzahnrädern und Zahnstangen handeln. Eingeschlossen sind auch Zahnräder, die am Spritzgussformteil nachträgliche bearbeitete Zähne besitzen, insbesondere solche die eine Schrägverzahnung oder komplexe Verzahnungen aufweisen.

### Verfahren

Das erfindungsgemäße Zahnrad kann durch Spritzguss, Coextrusion, Mehrkomponenten-Spritzguss oder durch Fügetechniken, wie Laminieren, Kleben, Schweissen von extrudierten oder spritzgegossenen Halbzeugen hergestellt werden. Bei Zahnrädern die nur aus der Polyamid-Formmasse (I) bestehen ist Spritzguss die bevorzugte Herstellungsmethode.

Bevorzugt wird der Gegenstand durch Spritzguss und Mehrkomponenten-Spritzguss hergestellt. Beim Mehrkomponenten-Spritzguss-Verfahren werden die mindestens zwei verschiedenen Polyamid-Formmassen (I) und (II) derart nacheinander in das Werkzeug dosiert, dass sie beide noch thermoplastisch verformbar sind. Dabei kann das Werkzeug über eine oder mehrere Anspritzstellen verfügen. Bevorzugt besitzt das Werkzeug für jede auszubildende Schicht mindestens eine Anspritzstelle. Besonders bevorzugt weist das Werkzeug jedoch nur eine einzige Anspritzstelle auf, über die die verschiedenen Formmassen dosiert werden. Die zuerst dosierte Formmasse bildet dann die äussere Schicht aus.

### Verwendung

Das erfindungsgemäße Zahnrad findet Verwendung in Lagerschalen, Führungsbuchsen, Lagergehäusen für Getriebe, Tür- oder Fenstergriffen, Schneckenradgetrieben eines elektrischen Aktuators in einer Servolenkung eines Kraftfahrzeugs, Komfortantrieben in einem Kraftfahrzeug.

Bevorzugt ist die Verwendung in einem Schneckenradgetriebe eines elektrischen Aktuators in einer Servolenkung eines Kraftfahrzeugs. Weiterhin bevorzugt ist die Verwendung in einem Komfortantrieb in einem Kraftfahrzeug, besonders bevorzugt einem Schiebedachantrieb, einem Sitzverstellungsantrieb oder einem Fensterheberantrieb.

Unter einem Komfortantrieb wird dabei im Rahmen der vorliegenden Erfindung insbesondere ein Fensterheberantrieb, ein Schiebedachantrieb, ein Sitzverstellungsantrieb oder ähnliches verstanden. Derartige Komfortantriebe zeichnen sich dadurch aus, dass das zur Übertragung von Drehmomenten dienende Zahnrad (Getrieberad) in unterschiedlichen Drehrichtungen angetrieben wird, wobei insbesondere stoßartige Belastungen auftreten können, die von dem Getrieberad aufgenommen und übertragen werden müssen.

### Beschreibung der Figuren

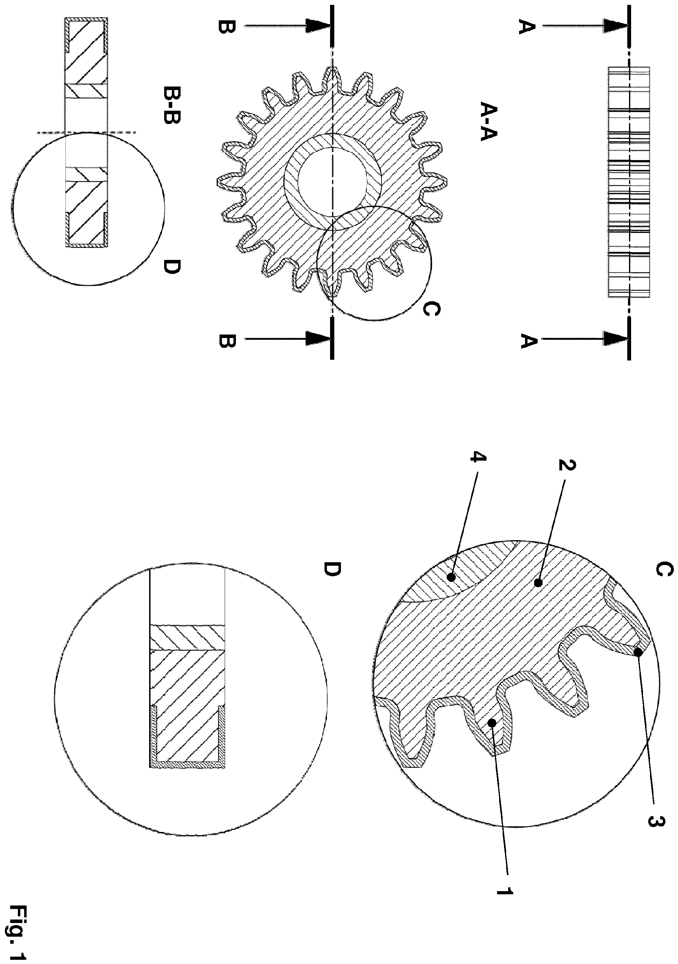

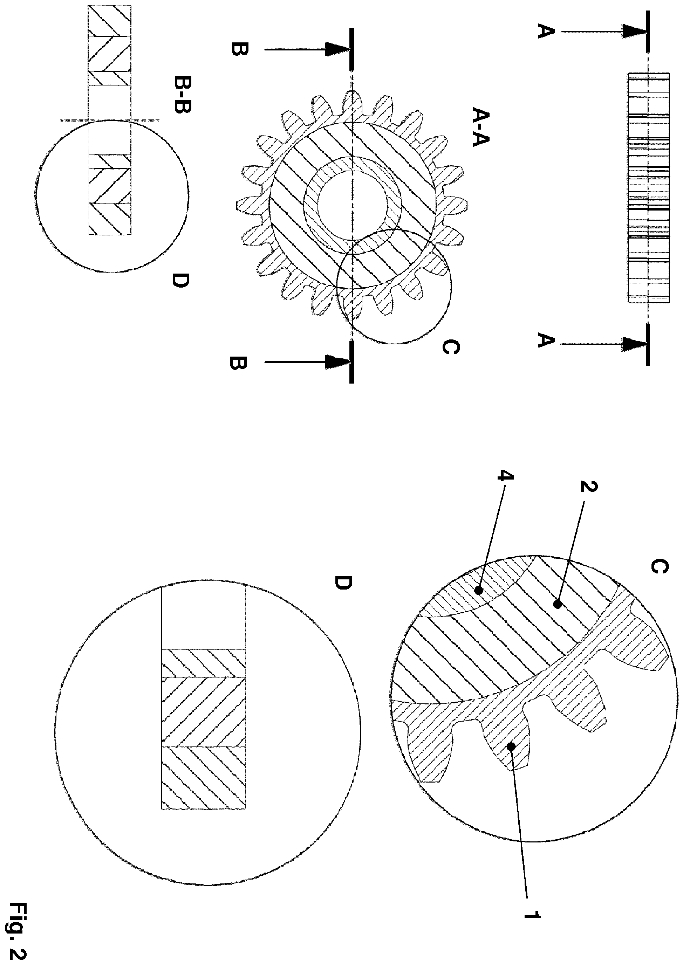

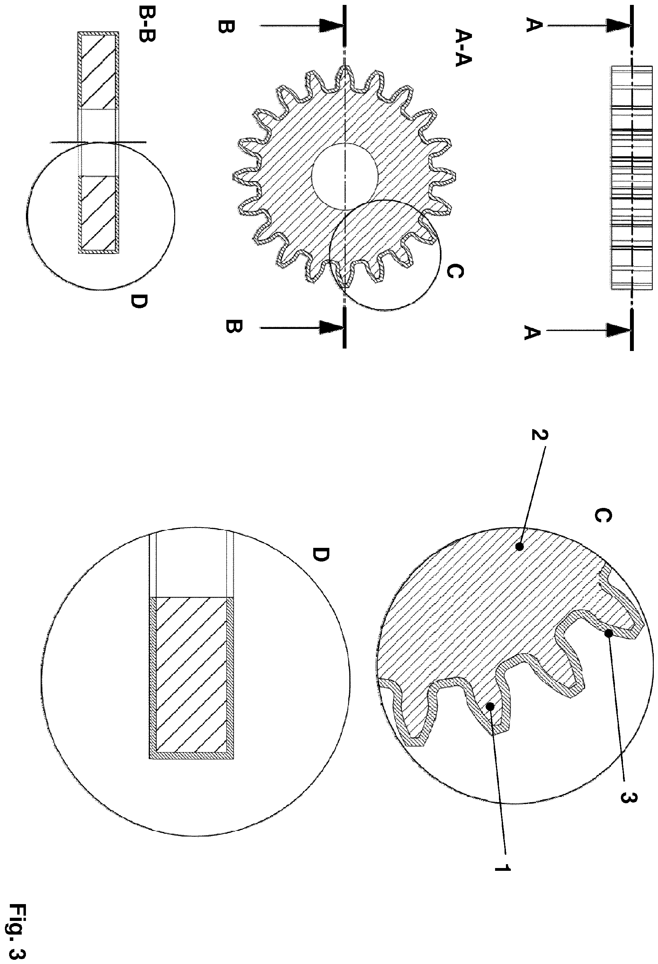

Die Figuren 1 bis 3 zeigen erfindungsgemäße Zahnräder, die aus mindestens zwei Formmassen (I) und (II) gebildet werden. Diese Zahnräder weisen mindestens zwei Bereiche auf, den Verzahnungsbereich (1) und den Kern- oder Schalenbereich (2). Dabei kann, wie in den Figuren 1 und 3 gezeigt, eine Verschleissschicht (3) die Oberfläche des Verzahnungsbereiches (1) bilden. Die alternative Ausführungsform, in der der Verzahnungsbereich (1) keine Verschleissschicht (3) aufweist wird in Figur 2 gezeigt.

Gemäß Figur 1 bildet die Polyamid-Formmasse (I) lediglich einen Teil des Verzahnungsbereiches (1), die sogenannte Verschleissschicht (3). Der Kernbereich (2) und der innere Teil des Verzahnungsbereiches (2) werden durch die Polyamid-Formmasse (II) gebildet. Gemäß Figur 2 weist der Verzahnungsbereich (1) keine Verschleissschicht (3) auf und der gesamte Verzahnungsbereich wird durch die Polyamid-Formmasse (I) gebildet, während der Kernbereich (2) durch die Polyamid-Formmasse (II) geformt wird. Die weitere Schicht (4), gebildet durch eine weitere Formmasse, verläuft in beiden Fällen konzentrisch zum Kernbereich (2). Figur 3 zeigt ein Zahnrad, welches keine weitere Schicht (4) aufweist.

### Bezugszeichenliste:

(1) : Verzahnungsbereich
(2): Kern- oder Schalenbereich
(3): Verschleissschicht
(4): Optionale weitere Schicht

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet:

### Schmelzpunkt (Tₘ) und Schmelzenthalpie (ΔHₘ)

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, T_{g}

Die Bestimmung der Glasübergangstemperatur T_{g} erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunk des Glasübergangbereichs, welcher als Glasübergangstemperatur angegeben wurde, wurde nach der Methode "Half Height" ermittelt.

### Relative Viskosität, ηᵣₑₗ

Die relative Viskosität wurde gemäß ISO 307 (2007) bei 20°C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Zug E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Bruchspannung und Bruchdehnung

Die Bestimmung von Bruchspannung und Bruchdehnung wurden gemäß ISO 527 (2012) bei 23°C mit einer Zuggeschwindigkeit von 5 mm/min an einem ISO-Zugstab, Typ A1 (Masse 170 x 20/10 x 4 mm), hergestellt gemäß der Norm ISO/CD 3167 (2003), durchgeführt.

### Schlagzähigkeit nach Charpy

Die Bestimmung der Schlagzähigkeit nach Charpy wurde gemäß ISO 179/2*eU (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

### Abriebfestigkeit

Der mit einer Last von 34 N beaufschlagte Probenkörper, ein ISO-Zugstab (Typ A1, Masse 170 x 20/10 x 4), wurde mit der angussfernen Seitenfläche (20 x 4 mm) und einer Geschwindigkeit von 3 m/min bei einer Temperatur von 23 °C über eine Stahlplatte hin und her bewegt. Nach 8 Stunden wurde der Abrieb anhand der Gewichtsabnahme des Probenkörpers bestimmt.

### Bestimmung der Amino- und Carboxyl-Endgruppenkonzentration

Zu 30 mg der Polymerprobe wurden jeweils 1.5 ml CD₂Cl₂ und 0.3 mL Trifluoressigsäure-Anhydrid zugegeben und die Proben 16 Stunden bei Raumtemperatur geschüttelt. Die NMR Spektren wurden auf einem Bruker AVANCE-III 400 NMR-Spektrometer gemessen. Die chemischen Verschiebungen wurden auf die Signale des Lösungsmittels bei 3.58 ppm (¹H) bzw. 67.57 ppm (¹³C) referenziert. Alle NMR-Experimente wurden unter Verwendung von Bruker Standard-Pulsprogrammen bzw. Parametersätzen aufgenommen (¹H und ¹³C 90º-Pulse von 11.9 bzw. 10.0 s).

### 2 Ausgangsmaterialien

Die in den Beispielen und Vergleichsbeispielen verwendeten Materialien werden in Tabelle 1 zusammengefasst.

**Tabelle 1: In den Beispielen und Vergleichsbeispielen verwendete Materialien.**

| Komponenten | Beschreibung | Hersteller |
|---|---|---|
| PA Typ-A (Komponente A1) | PA616, r. V. = 2,20, Tm = 195°C, C:N = 11, A-EG = 40, C-EG = 33 | EMS-CHEMIE AG (Schweiz) |
| PA Typ-B (Komponente A1) | PA12, r. V. = 2,25, Tm = 178°C, C:N = 12, A-EG = 30, C-EG = 33 | EMS-CHEMIE AG (Schweiz) |
| PA Typ-C (Komponente D) | PA66, r. V. = 1,85, Tm = 262°C | Radici (Italien) |
| PA Typ-D (Komponente D) | PA 6I/6T (70:30), r. V. = 1,52, Glasübergangstemperatur = 125°C | EMS-CHEMIE AG (Schweiz) |
| PA Typ-E (Komponente A1) | PA1016, r. V. = 2,23, Tm = 177°C, C:N = 13, A-EG = 38, C-EG = 35 | EMS-CHEMIE AG (Schweiz) |
| GF-1 | CS 7928, 4,5 mm lang, 10 µm Durchmesser (Fasern mit kreisförmigem Querschnitt) | BAYER AG, Deutschland |
| GF-2 | CSG3PA-820, 3 mm lang, 28 µm breit, 7 µm dick, Aspektverhältnis der Querschnittsachsen = 4, (flache Glasfasern) | NITTO BOSE-KI, Japan |
| Stabilisierung | Mischung aus Kupfer(I)iodid und Kaliumiodid im Verhältnis 1:7 | - |

| | | |
|---|---|---|
| A-EG: Amino-Endgruppen [mmol/kg], C-EG: Carboxyl-Endgruppen [mmol/kg] Tm: Schmelztemperatur, r. V.: relative Viskosität | | |

### 3 Beispiele und Vergleichsbeispiele

### Herstellung der Polyamid-Formmassen

Generell werden zur Herstellung der Polyamid-Formmassen die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen. Die eingesetzten Glasfasern werden über einen Sidefeeder im beabsichtigten Verhältnis in die Polymerschmelze dosiert und im Zylinder der Compoundiermaschine weiter homogenisiert. Die Dosierungen aller Komponenten in den Einzug bzw. Sidefeeder werden so über elektronisch gesteuerte Waagen eingestellt, dass die gewünschten Mengenverhältnisse Glas - Polymer daraus resultieren.

Die Compoundierung erfolgt bei eingestellten Extruder-Zylindertemperaturen von z.B. 230°C bis 300°C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder eine Stranggranulierung verwendet.

Die somit bevorzugt in Granulatform erhaltene Kunststoff-Formmasse wird anschließend getrocknet und kann nachher durch Spritzguss zu Formkörpern weiterverarbeitet werden. Dies erfolgt über ein erneutes Aufschmelzen des trockenen Granulats in einem beheizbaren Zylinder, Fördern der Schmelze in eine Spritzgussform, in der die Schmelze erstarren kann.

### Herstellung der Polyamid-Formmasse (I) und (II) gemäß Beispiel B1 bis B9

Die Formmassen für die Beispiele B1 bis B9 wurden auf einem Zweiwellenextruder der Firma Werner & Pfleiderer Typ ZSK 25 hergestellt. Die Polyamide (A1), (A2) und (D) wurden in den in Tabelle 2 angegebenen Mengenanteilen über Dosierwaagen in den Einzug des Extruders dosiert. Die eingesetzten Füllstoffe wurden über einen Sidefeeder (Zone 6) im beabsichtigten Verhältnis in die Polymerschmelze gefördert und im Zylinder der Compoundiermaschine weiter homogenisiert. Die Temperatur des ersten Gehäuses wurde auf 80°C eingestellt, diejenige der restlichen Gehäuse aufsteigend von 240 bis 260°C für B1 bis B4 sowie B9 und 260 bis 290°C für B5 bis B8. Es wurde eine Drehzahl von 200 U/min und ein Durchsatz von 10 kg/h verwendet und in der dritten Zone vor der Düse im Stickstoffstrom entgast. Die als Strang ausgetragene Polyamid-Formmasse wurde im Wasserbad abgekühlt, granuliert und das erhaltene Granulat bei 90 °C im Vakuum bei 30 mbar auf einen Wassergehalt von unter 0.1 Gew.-% getrocknet.

Aus dem erhaltenen Granulat wurden Zugstäbe, Schlagstäbe und UL-Stäbe als Probekörper gespritzt, an denen die in Tabelle 2 angegebenen Eigenschaften bestimmt wurden. Die Prüfkörper wurden auf einer Spritzgussmaschine der Firma Arburg, Modell Allrounder 420 C 1000-250 hergestellt. Dabei wurden aufsteigende Zylindertemperaturen von 250°C bis 270°C für B1 bis B4 sowie B9 und 270 bis 300°C für B5 bis B8 verwendet. Die Werkzeugtemperatur lag jeweils bei 80°C. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

**Tabelle 2: Polyamid-Formmassen (I) und (II) zur Herstellung der Zahnräder.**

| **Komponenten** | **Einheit** | **B1** | **B2** | **B3** | **B4** | **B5** | **B6** | **B7** | **B8** | **B9** |
|---|---|---|---|---|---|---|---|---|---|---|
| PA Typ-A (PA616) (Komponente A1) | Gew.-% | 99.5 | 69.5 | 69.5 | - | - | - | - | - | - |
| PA Typ-B (PA12) (Komponente A1) | Gew.-% | - | - | - | 69.5 | - | - | - | - | - |
| PA Typ-C (PA66) (Komponente D) | Gew.-% | - | - | - | - | 52.1 | 99.5 | 69.5 | 69.5 | - |
| PA Typ-D (PA6I/6T) (Komponente D) | Gew.-% | - | - | - | - | 17.4 | - | - | - | - |
| PA Typ-E (PA1016) (Komponente A1) | Gew.-% | - | - | - | - | - | - | - | - | 79.5 |
| PA-Formmasse | - | (I) | (I) | (I) | (I) | (II) | (II) | (II) | (II) | (I) |
| Calciumstearat | Gew.-% | 0.10 | 0.10 | 0.10 | 0.10 | 0.10 | 0.10 | 0.10 | 0.10 | 0.10 |
| Stabilisierung | Gew.-% | 0.40 | 0.40 | 0.40 | 0.40 | 0.40 | 0.40 | 0.40 | 0.40 | 0.40 |
| Glasfasern Typ A | Gew.-% | | 30.0 | | | 30.0 | | 30.0 | | |
| Glasfasern Typ B | Gew.-% | | | 30.0 | 30.0 | | | | 30.0 | 20.0 |

| **Eigenschaften** | | | | | | | | | | |
|---|---|---|---|---|---|---|---|---|---|---|
| Zug-E-Modul | MPa | 1600 | 6230 | 6650 | 6890 | 11000 | 3300 | 10500 | 11100 | 4400 |
| Bruchfestigkeit | MPa | 54 | 104 | 107 | 110 | 186 | 90 | 190 | 200 | 89 |
| Bruchdehnung | % | 260 | 6.3 | 6.8 | 6.3 | 3.1 | 45 | 3.0 | 3.2 | 11 |
| Schlagzähigkeit Charpy, 23°C | kJ/m² | o.B. | 78 | 89 | 77 | 70 | o.B. | 60 | 68 | 72 |
| Abrieb | mg | 1.5 | 0.9 | 0.8 | 1.1 | 1.2 | 2.4 | 1.5 | 1.4 | 0.8 |

| | | | | | | | | | | |
|---|---|---|---|---|---|---|---|---|---|---|
| o.B. = ohne Bruch. | | | | | | | | | | |

### Herstellung der Zahnräder

Die Zahnräder Z1 bis Z8 mit der in Tabelle 3 angegebenen Geometrie wurden auf einer Spritzguss-Anlage Ferromatik Milacron K85D-S/2F gefertigt, wobei Zahnräder mit unterschiedlicher Formmasse für Kern- und Verzahnungsbereich durch Mehrkomponenten-Spritzgusshergestellt (Z1 bis Z3, Z6 bis Z8) wurden. Dabei wurden die Formmassen für Kern- und Verzahnungsbereich über eine Anspritzstelle in das Werkzeug dosiert und zwar derart, dass die beiden Formmassen noch thermoplastisch verformbar waren. Entweder erfolgte die Herstellung der Zahnräder nur mit der Polyamid-Formmassen (I) oder es wurden die beiden verschiedenen Polyamid-Formmassen (I) und (II) nacheinander in das Werkzeug dosiert. Die Polyamid-Formmasse, die die äussere Schicht im Verzahnungsbereich ausbilden soll (Verschleissschicht (3), Figur 3), wird jeweils zuerst in das Werkzeug dosiert. Die umlaufende Verschleissschicht, gebildet durch die Polyamid-Formmasse für den Verzahnungsbereich, hatte eine Schichtdicke von 0.2 mm. Für alle Versuche Z1 bis Z8 betrug die Werkzeugtemperatur 100°C und die Einspritzgeschwindigkeit 20 mm/s. Der Einzug wurde auf 40°C temperiert, für die übrigen Zylinder wurden aufsteigende Zylindertemperaturen von 240°C bis 260°C für die Formmassen B1 bis B4 sowie 270 bis 290°C für die Formmassen B4 bis B8 verwendet. Die Plastifizierung der Formmassen erfolgte mit einer Standard 3-Zonenschnecke. Für die Zahnräder Z4 und Z5 wurde nur eine Formmasse (Formmasse (I)) in das Werkzeug dosiert.

**Tabelle 3: Zahnrad-Geometrie.**

| **Bezeichnung** | ***Zeichen*** | **Einheit** | |
|---|---|---|---|
| Zähnezahl | *z* | - | 60 |
| Normalmodul | *m* | mm | 1.5 |
| Zahnbreite | *b* | mm | 6 |
| Teilkreisdurchmesser | *d* | mm | 90 |
| Profilverschiebung | *x* | mm | -1.5 |
| Eingriffswinkel | *alpha* | ∘ | 20 |

### Test der Zahnräder

Verwendet wurde ein vereinfachter Prüfaufbau, der eine schlagende und schleifende Verschleissbewegung imitiert, ähnlich wie sie bei der Wälzbewegung im Eingriffsbereich der Zähne auftritt. Dazu wurde ein plangeschliffener Stahl-Bohrer mit einem Kopf der Dimension 2x10 mm mit einer Kraft 75 N gegen die Zahnradseite (auf einem Radius von 70 mm von der Zahnradmitte aus) gedrückt. Dabei wurde der Bohrer von einem Hilti Bohrhammer TE-30M AVR wie folgt angetrieben: Drehzahl = 240 Upm, Schlagzahl = 1800 min⁻¹, Einzelschlagenergie: 3.3 J. Beurteilt wurde die Eindringtiefe sowie die Verbundhaftung nach einer Versuchszeit von 16 Stunden.

**Tabelle 4: Beispiele und Vergleichsbeispiele.**

| **Zahnrad** | **Gemäß Erfindung** | **Formmasse für Kernbereich** | **Formmasse für Verzahnungsbereich** | **Verbund-Haftung** | **Eindringtiefe** |
|---|---|---|---|---|---|
| Z1 | nein | B7 (II) | B6 (II) | ++ | - |
| Z2 | nein | B7 (II) | B8 (II) | ++ | - |
| Z3 | ja | B2 (I) | B1 (I) | ++ | + |
| Z4 | ja | B2 (I) | B2 (I) | n.a. | + |
| Z5 | ja | B3 (I) | B3 (I) | n.a. | ++ |
| Z6 | ja | B5 (II) | B1 (I) | + | + |
| Z7 | nein | B7 (II) | B4 (I) | ++ | + |
| Z8 | ja | B3(I) | B9(I) | ++ | ++ |

| | | | | | |
|---|---|---|---|---|---|
| Eindringtiefe des Bohrers: -: > 0.10 mm; +: 0.05 bis 0.10 mm; ++: < 0.05 mm Verbundhaftung der Schichten im Kontaktbereich des Bohrkopfes, beurteilt wird die Fläche an denen sich die Schichten getrennt haben: -: > 50%; +: 10 bis 50%; ++: weniger als 10% der Fläche, n.a. = nicht anwendbar. | | | | | |

### 4 Diskussion der Ergebnisse

Bei den nicht erfindungsgemäßen Zahnrädern Z1 und Z2, welche die Polyamid-Formmasse nicht enthalten wurde eine sehr große Eindringtiefe von mehr als 0.10 mm beobachtet. Für die erfindungsgemäßen Zahnräder Z3 bis Z6 und Z8 hingegen wurde nur eine geringe Eindringtiefe von zwischen 0.05 bis 0.10 mm und für Z5 und Z8 sogar kleiner als 0.05 mm beobachtet. Die Verbundhaftung war für alle Zahnräder gut.

Nur Zahnräder deren Verzahnungs- oder Kernbereich aus der Polyamid-Formmasse (I) gebildet wurde, zeigten sowohl eine gute Verbundhaftung als auch eine sehr gute mechanische Beständigkeit, ausgedrückt durch die Eindringtiefe.

## Patentansprüche

1. Zahnrad enthaltend die Polyamid-Formmasse (I) oder bestehend aus dieser Polyamid-Formmasse, wobei die Polyamid-Formmasse (I) die folgenden Komponenten (A) bis (C) enthält oder aus diesen gebildet wird:
(A) 35 bis 100 Gew.-% einer Mischung gebildet aus den Polyamiden (A1) und (A2); wobei
(A1) 50 bis 100 Gew.-% mindestens eines Polyamids enthaltend zu mindestens 50 Mol-%PA X.16-Einheiten, wobei X für ein acyclisches, aliphatisches Diamin mit 4 bis 12 Kohlenstoffatomen und 16 für 1,16-Hexadecandisäure steht, ist; und
(A2) 0 bis 50 Gew.-% mindestens eines aliphatischen oder teilaromatischen Polyamids, welches verschieden von Komponente (A1), ist;
wobei die Summe aus (A1) und (A2) 100 Gew.-% ergibt;
(B) 0 bis 60 Gew.-% mindestens eines Füllstoffes;
(C) 0 bis 5 Gew.-% mindestens eines Zusatzstoffes;
wobei sich die Gewichtsanteile der Komponenten (A) bis (C) auf 100 Gew.-% ergänzen.

2. Zahnrad gemäß Anspruch 1, **dadurch gekennzeichnet, dass**
das Zahnrad einen Verzahnungsbereich (1) und einen Kern- oder Schalenbereich (2) aufweist;
wobei der komplette Verzahnungsbereich (1) oder zumindest ein Teil davon aus der Polyamid-Formmasse (I) besteht, wobei wenn nur ein Teil des Verzahnungsbereichs (1) aus der Polyamid-Formmasse (I) besteht es bevorzugt ist, dass dieser Teil als Verschleißschicht (3) ausgebildet ist, die sich über die Außenseite des Verzahnungsbereichs (1) erstreckt; und
der Kern- oder Schalenbereich (2) entweder die Polyamid-Formmasse (I) oder eine von der Polyamid-Formmasse (I) verschiedene Polyamid-Formmasse (II) enthält oder aus dieser besteht, wobei es bevorzugt ist, dass der Kern- oder Schalenbereich aus der Polyamid-Formmasse (II) besteht.

3. Zahnrad gemäß einem der vorhergehenden Ansprüche, **dadurch gekennzeichnet, dass** die Komponente (A1)
aus mindestens einem Polyamid, enthaltend 60 Mol-% oder 80 Mol-% und bevorzugt 100 Mol-% mindestens eine Polyamid-Einheit X.16, wobei X für ein acyclisches, aliphatisches Diamin mit 4 bis 12 Kohlenstoffatomen und 16 für 1,16-Hexadecandisäure steht, besteht;
oder
ausgewählt ist aus der Gruppe bestehend aus PA1016, PA916, PA516, PA616, PA516/616, PA616/916, PA616/1016, PA616/618 und Mischungen hiervon;
oder
ausgewählt ist aus der Gruppe bestehend aus PA616, PA516, PA916, PA1016, PA516/616, PA616/1016 und Mischungen hiervon, wobei PA 616 besonders bevorzugt ist.

4. Zahnrad gemäß einem der vorhergehenden Ansprüche, **dadurch gekennzeichnet, dass**
Komponente (A) aus
50 bis 90 Gew.-%, bevorzugt 60 bis 85 Gew.-% Komponente (A1) und 10 bis 50 Gew.-%, bevorzugt 15 bis 40 Gew.-% Komponente (A2) gebildet wird; wobei die Summe aus (A1) und (A2) 100 Gew.-% (A) ergibt; und/oder
der Anteil von Komponente (A) in der Polyamid-Formmasse (I) im Bereich von 47 bis 90 Gew.-%, bevorzugt von 58 bis 79,9 Gew.-% und besonders bevorzugt von 63 bis 74.9 Gew.-%, bezogen auf das Gesamtgewicht der Komponenten (A) bis (C), liegt, und/oder
der Anteil von Komponente (B) in der Polyamid-Formmasse (I) im Bereich von 10 bis 50 Gew.-%, bevorzugt von 20 bis 40 Gew.-% und besonders bevorzugt von 22 bis 37 Gew.-%, bezogen auf das Gesamtgewicht der Komponenten (A) bis (C), liegt, und/oder
der Anteil von Komponente (C) in der Polyamid-Formmasse (I) im Bereich von 0 bis 3 Gew.-% und bevorzugt von 0,1 bis 2,0 Gew.-%, bezogen auf das Gesamtgewicht der Komponenten (A) bis (C), liegt.

5. Zahnrad gemäß einem der vorhergehenden Ansprüche, **dadurch gekennzeichnet, dass** Komponente (A2)
ein aliphatisches oder teilaromatisches Polyamid gebildet aus aliphatischen Diaminen mit 4 bis 12, bevorzugt 6 bis 10 Kohlenstoffatomen, aliphatischen Dicarbonsäuren mit 6 bis 12, bevorzugt 6 bis 10 Kohlenstoffatomen und aromatischen Dicarbonsäuren, insbesondere Terephthalsäure und Isophthalsäure, ist; oder
ausgewählt ist aus der Gruppe bestehend aus PA6, PA46, PA56, PA66, PA6/66, PA69, PA610, PA612, PA96, PA910, PA106, PA109, PA6T/66, PA6T/6I, PA6T/6I/610, PA6T/6I/612, PA6T/6I/614, PA6T/6I/616, PA6T/DT (D = 2-Methylpentan-1,5-diamin), PA6T/6I/66, PA6T/6, PA6T/10T, PA9T, PA9T/MT (M = 2-Methyloctan-1,8-diamin), PA10T, PA12T, PA10T/610, PA10T/612, PA10T/614, PA10T/616, PA10T/618, PA10T/916, PA10T/1016 und Mischungen hiervon; oder ausgewählt ist aus der Gruppe bestehend aus PA66, PA610, PA612, PA106, PA6T/6I, PA6T/6I/610, PA6T/6I/612, PA6T/6I/614, PA6T/6I/616, PA6T/10T, PA10T/610, PA10T/612, PA10T/614, PA10T/616, PA10T/618, PA10T/1016 und Mischungen hiervon; oder Komponente (A2) ausgewählt ist aus der Gruppe bestehend aus PA610, PA612, PA10T/1016, PA10T/612 und Mischungen hiervon.

6. Zahnrad gemäß einem der Ansprüche 1 bis 5, **dadurch gekennzeichnet, dass**
Komponente (B) faserförmig oder teilchenförmig ist und bevorzugt ausgewählt ist aus der Gruppe bestehend aus Glasfasern, oder Glaskugeln und Mischungen daraus, wobei Glasfasern besonders bevorzugt sind und insbesondere die Glassorte des Glasfüllers (B) ausgewählt ist aus E-Glas, ECR-Glas, S-Glas, A-Glas, AR-Glas, R-Glas und Mischungen davon.

7. Zahnrad gemäß einem der Ansprüche 1 bis 6, **dadurch gekennzeichnet, dass**
Komponente (C) ausgewählt ist aus der Gruppe bestehend aus Schmiermitteln, Wärmestabilisatoren, Verarbeitungsstabilisatoren, Oxidationsverzögerern, Verarbeitungshilfmittel, Viskositätsmodifikatoren, Mitteln gegen Wärmezersetzung und Zersetzung durch ultraviolettes Licht, Gleit- und Entformungsmitteln, Färbemitteln, insbesondere Farbstoffen und Pigmenten, Keimbildungsmitteln, Weichmachern, anorganischen Pigmenten, organischen Pigmenten und Mischungen davon, wobei Schmiermittel bevorzugt von 0 bis 2 Gew.-%, besonders bevorzugt von 0,05 bis 2,0 Gew.-%, insbesondere bevorzugt von 0,1 bis 1,5 Gew.% und am bevorzugtesten von 0,1 bis 1,0 Gew.-% und Wärmestabilisatoren bevorzugt von 0 bis 3 Gew.-%, besonders bevorzugt von 0,02 bis 2,0 Gew.-% und insbesondere bevorzugt von 0,1 bis 1,5 Gew.%, jeweils bezogen auf das Gesamtgewicht der Komponenten (A) bis (C), enthalten sind.

8. Zahnrad gemäß einem der Ansprüche 1 bis 7, **dadurch gekennzeichnet, dass** die Polyamid-Formmasse (I)
eine Bruchfestigkeit bestimmt nach ISO 527 von mindestens 50 MPa, bevorzugt mindestens 80 MPa und besonders bevorzugt mindestens 100 MPa aufweist; und/oder
eine Bruchdehnung bestimmt nach ISO 527 von mindestens 4 %, bevorzugt mindestens 5 % und besonders bevorzugt mindestens 6 % aufweist; und/oder
einen Zug-E-Modul bestimmt nach ISO 527 von mindestens 1000 MPa, bevorzugt mindestens 4000 MPa und besonders bevorzugt mindestens 6000 MPa aufweist; und/oder
eine Charpy-Schlagzähigkeit bei 23°C bestimmt nach ISO 179/2eU von mindestens 60 kJ/m², bevorzugt mindestens 70 kJ/m² und besonders bevorzugt mindestens 80 kJ/m² aufweist; und/oder
einen Abrieb, bestimmt am angussfernen Teil eines ISO-Zugstabs (Typ A1, Masse 170 x 20/10 x4), der mit einer Geschwindigkeit von 3 m/min bei 23°C über eine Stahlplatte bewegt wird (Auflagefläche 20 x 4 mm²) nach 8 Stunden von maximal 1 mg, bevorzugt von maximal 0,9 mg und besonders bevorzugt von maximal 0,8 mg aufweist.

9. Zahnrad gemäß einem der Ansprüche 2 bis 8, **dadurch gekennzeichnet, dass**
die Polyamid-Formmasse (II) die folgenden Komponenten (D) bis (F) enthält und bevorzugt aus diesen besteht;
(D) 35 bis 100 Gew.-% mindestens eines aliphatischen oder teilaromatischen Polyamids, bevorzugt gebildet aus aliphatischen Diaminen mit 4 bis 12, besonders bevorzugt 6 bis 10 Kohlenstoffatomen, aliphatischen Dicarbonsäuren mit 6 bis 12, bevorzugt 6 bis 10 Kohlenstoffatomen und aromatischen Dicarbonsäuren, insbesondere Terephthalsäure und Isophthalsäure;
(E) 0 bis 60 Gew.-% mindestens eines Füllstoffes;
(F) 0 bis 5 Gew.-% mindestens eines Zusatzstoffes;
wobei sich die Gewichtsanteile der Komponenten (D) bis (F) auf 100 Gew.-% ergänzen.

10. Zahnrad gemäß Anspruch 9, **dadurch gekennzeichnet, dass**
das Polyamid der Komponente (D) ausgewählt ist aus der Gruppe bestehend aus PA6, PA66, PA6/66, PA46, PA56, PA510, PA610, PA612, PA6T/6I, PA6T/66, PA6T/10T, PA9T, PA9T/MT (M = Methyloctan-1,8-diamin), PA10T, PA11/10T, PA12/10T, PA10T/66, PA10T/106, PA10T/610, PA10T/612 und Mischungen davon;
oder
das Polyamid der Komponente (D) ausgewählt ist aus der Gruppe bestehend aus PA6, PA66, PA6/66, PA6T/6I, PA6T/66, PA6T/10T, PA10T/612 und Mischungen davon, bevorzugt als PA66 oder aus Mischungen aus PA66 und PA6T/6I;
und/oder
der Füllstoff (E) ausgewählt ist aus der Gruppe bestehend aus gemahlenem Glas, Glasfasern mit rundem Querschnitt, Glasfasern mit flachem Querschnitt und Mischungen davon.

11. Zahnrad gemäß Anspruch 9, **dadurch gekennzeichnet, dass**
Komponente (D) der Polyamid-Formmasse(II) ausgewählt ist aus der Gruppe bestehend aus PA66 und PA 6I/6T, insbesondere amorphes PA 6I/6T, besonders bevorzugt mit einem Molverhältnis 6I:6T von 70:30 und Mischungen davon, wobei PA66 besonders bevorzugt ist; und/oder
Komponente (F) der Polyamid-Formmasse(II) ausgewählt ist aus der Gruppe bestehend aus Calciumstearat, Wärmestabilisatoren, insbesondere Kupferstabilisatoren und Mischungen hiervon.

12. Zahnrad gemäß einem der vorhergehenden Ansprüche, **dadurch gekennzeichnet, dass**
das Zahnrad neben dem Verzahnungsbereich (1) und dem Kern- oder Schalenbereich (2) noch eine weitere Schicht (4) aufweist, die bevorzugt aus einem thermoplastischen Kunststoff gebildet wird, der bevorzugt ausgewählt ist aus der Gruppe bestehend aus Polyamid, Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon, PSU, PESU oder PPSU, Polyphenylenether, Polyphenylensulfid, Polyphenylenoxid, flüssigkristalline Polymere, Polyetherketon, Polyetheretherketon, Polyimid, Polyamidimid, Polyesterimid, Polyetheramid, Polyesteramid, Polyetheresteramid, Polyurethan, insbesondere TPU oder PUR, Polysiloxan, Polyacrylat, Polymethacrylat sowie Mischungen oder Copolymere auf Basis solcher Systeme und Mischungen hiervon.

13. Zahnrad gemäß einem der vorhergehenden Ansprüche, **dadurch gekennzeichnet, dass**
das Zahnrad von 5 bis 100, bevorzugt 20 bis 80 und insbesondere bevorzugt von 55 bis 66 Zähne aufweist; und/oder
der Modul (Normal-, Stirn-, Axial-) des Zahnrads von 0.1 bis 10 mm, bevorzugt 0,5 bis 5 mm und besonders bevorzugt von 1 bis 3 mm beträgt; und/oder
die Zahnbreite von 1 bis 20 mm, bevorzugt von 2 bis 15 mm und besonders bevorzugt von 4 bis 12 mm beträgt.

14. Verfahren zur Herstellung eines Zahnrads gemäß einem der Ansprüche 1 bis 13, wobei es sich um ein Mehrkomponenten-Spritzguss-Verfahren oder ein Coextrusions-Verfahren handelt.

15. Verwendung eines Zahnrades gemäß einem der Ansprüche 1 bis 13 in Lagerschalen, Führungsbuchsen, Lagergehäusen für Getriebe, Tür- oder Fenstergriffen, Schneckenradgetrieben eines elektrischen Aktuators in einer Servolenkung eines Kraftfahrzeugs, Komfortantrieben in einem Kraftfahrzeug.

## Claims

1. A gear wheel containing the polyamide moulding compound (I) or consisting of this polyamide moulding compound, wherein the polyamide moulding compound (I) contains or is formed from the following components (A) to (C):
(A) 35 to 100 wt.% of a mixture formed from the polyamides (A1) and (A2); wherein
(A1) is 50 to 100 wt.% of at least one polyamide containing at least 50 mole % PA X.16 units, wherein X stands for an acyclic, aliphatic diamine with 4 to 12 carbon atoms and 16 for 1,16-hexadecanedioic acid; and
(A2) is 0 to 50 wt.% of at least one aliphatic or partially aromatic polyamide which [is] different from component (A1);
wherein the total of (A1) and (A2) yields 100 wt.%;
(B) 0 to 60 wt.% of at least one filler;
(C) 0 to 5 wt.% of at least one additive;
wherein the weight contents of components (A) to (C) add up to 100 wt.%.

2. A gear wheel according to Claim 1, **characterised in that** the gear wheel has a gearing region (1) and a core or shell region (2); wherein the complete gearing region (1) or at least a portion thereof consists of the polyamide moulding compound (I), wherein if only a portion of the gearing region (1) consists of the polyamide moulding compound (I) it is preferred for this portion to be formed as a wearing layer (3) which extends over the outside of the gearing region (1); and the core or shell region (2) contains or consists of either the polyamide moulding compound (I) or a polyamide moulding compound (II) different from the polyamide moulding compound (I), it being preferred for the core or shell region to consist of the polyamide moulding compound (II).

3. A gear wheel according to one of the preceding claims, **characterised in that** component (A1)
consists of at least one polyamide, containing 60 mole % or 80 mole % and preferably 100 mole % of at least one polyamide unit X.16, wherein X stands for an acyclic, aliphatic diamine with 4 to 12 carbon atoms and 16 stands for 1,16-hexadecanedioic acid;
or
is selected from the group consisting of PA1016, PA916, PA516, PA616, PA516/616, PA616/916, PA616/1016, PA616/618 and mixtures thereof;
or
is selected from the group consisting of PA616, PA516, PA916, PA1016, PA516/616, PA616/1016 and mixtures thereof, PA616 being particularly preferred.

4. A gear wheel according to one of the preceding claims, **characterised in that**
component (A) is formed from
50 to 90 wt.%, preferably 60 to 85 wt.%, of component (A1) and 10 to 50 wt.%, preferably 15 to 40 wt.%, of component (A2); wherein the total of (A1) and (A2) yields 100 wt.%; and/or
the proportion of component (A) in the polyamide moulding compound (I) is in the range from 47 to 90 wt.%, preferably from 58 to 79.9 wt.%, and particularly preferably from 63 to 74.9 wt.%, relative to the total weight of components (A) to (C), and/or
the proportion of component (B) in the polyamide moulding compound (I) is in the range from 10 to 50 wt.%, preferably from 20 to 40 wt.%, and particularly preferably from 22 to 37 wt.%, relative to the total weight of components (A) to (C), and/or
the proportion of component (C) in the polyamide moulding compound (I) is in the range from 0 to 3 wt.% and preferably from 0.1 to 2.0 wt.%, relative to the total weight of components (A) to (C).

5. A gear wheel according to one of the preceding claims, **characterised in that** component (A2)
is an aliphatic or partially aromatic polyamide formed from aliphatic diamines with 4 to 12, preferably 6 to 10, carbon atoms, aliphatic dicarboxylic acids with 6 to 12, preferably 6 to 10, carbon atoms and aromatic dicarboxylic acids, in particular terephthalic acid and isophthalic acid; or
is selected from the group consisting of PA6, PA46, PA56, PA66, PA6/66, PA69, PA610, PA612, PA96, PA910, PA106, PA109, PA6T/66, PA6T/6I, PA6T/6I/610, PA6T/6I/612, PA6T/6I/614, PA6T/6I/616, PA6T/DT (D = 2-methylpentane-1,5-diamine), PA6T/6I/66, PA6T/6, PA6T/10T, PA9T, PA9T/MT (M = 2-methyloctane-1,8-diamine), PA10T, PA12T, PA10T/610, PA10T/612, PA10T/614, PA10T/616, PA10T/618, PA10T/916, PA10T/1016 and mixtures thereof; or
is selected from the group consisting of PA66, PA610, PA612, PA106, PA6T/6I, PA6T/6I/610, PA6T/6I/612, PA6T/6I/614, PA6T/6I/616, PA6T/10T, PA10T/610, PA10T/612, PA10T/614, PA10T/616, PA10T/618, PA10T/1016 and mixtures thereof; or
component (A2) is selected from the group consisting of PA610, PA612, PA10T/1016, PA10T/612 and mixtures thereof.

6. A gear wheel according to one of Claims 1 to 5, **characterised in that**
component (B) is fibrous or particulate and preferably is selected from the group consisting of glass fibres, or glass spheres and mixtures thereof, glass fibres being particularly preferred and in particular the glass type of the glass filler (B) being selected from E-glass, ECR-glass, S-glass, A-glass, AR-glass, R-glass and mixtures thereof.

7. A gear wheel according to one of Claims 1 to 6, **characterised in that**
component (C) is selected from the group consisting of lubricants, heat stabilisers, process stabilisers, oxidation retarders, processing aids, viscosity modifiers, agents to counter thermal degradation and degradation due to ultraviolet light, lubricating agents and mould release agents, colouring matter, in particular dyes and pigments, nucleating agents, plasticisers, inorganic pigments, organic pigments and mixtures thereof, wherein lubricants are contained preferably from 0 to 2 wt.%, particularly preferably from 0.05 to 2.0 wt.%, particularly preferably from 0.1 to 1.5 % by weight, and most preferably from 0.1 to 1.0 wt.%, and heat stabilisers are contained preferably from 0 to 3 wt.%, particularly preferably from 0.02 to 2.0 wt.%, and particularly preferably from 0.1 to 1.5 wt.%, in each case relative to the total weight of components (A) to (C).

8. A gear wheel according to one of Claims 1 to 7, **characterised in that** the polyamide moulding compound (I)
has a breaking strength determined to ISO 527 of at least 50 MPa, preferably at least 80 MPa, and particularly preferably at least 100 MPa; and/or
has an elongation at break determined to ISO 527 of at least 4%, preferably at least 5%, and particularly preferably at least 6%; and/or
has a tensile modulus of elasticity determined to ISO 527 of at least 1000 MPa, preferably at least 4000 MPa, and particularly preferably at least 6000 MPa; and/or
has a Charpy impact strength at 23°C determined to ISO 179/2eU of at least 60 kJ/m², preferably at least 70 kJ/m², and particularly preferably at least 80 kJ/m²; and/or
has an abrasion, determined on the portion, away from the sprue, of an ISO tensile test bar (Type A1, dimensions 170 x 20/10 x 4), which is moved at a speed of 3 m/min at 23°C across a steel plate (supporting surface 20 x 4 mm²) after 8 hours of at most 1 mg, preferably of at most 0.9 mg, and particularly preferably of at most 0.8 mg.

9. A gear wheel according to one of Claims 2 to 8, **characterised in that**
the polyamide moulding compound (II) contains the following components (D) to (F) and preferably consists thereof;
(D) 35 to 100 wt.% of at least one aliphatic or partially aromatic polyamide, preferably formed of aliphatic diamines with 4 to 12, particularly preferably 6 to 10, carbon atoms, aliphatic dicarboxylic acids with 6 to 12, preferably 6 to 10, carbon atoms, and aromatic dicarboxylic acids, in particular terephthalic acid and isophthalic acid;
(E) 0 to 60 wt.% of at least one filler;
(F) 0 to 5 wt.% of at least one additive;
wherein the proportions by weight of components (D) to (F) add up to 100 wt.%.

10. A gear wheel according to Claim 9, **characterised in that**
the polyamide of component (D) is selected from the group consisting of PA6, PA66, PA6/66, PA46, PA56, PA510, PA610, PA612, PA6T/6I, PA6T/66, PA6T/10T, PA9T, PA9T/MT (M = methyloctane-1,8-diamine), PA10T, PA11/10T, PA12/10T, PA10T/66, PA10T/106, PA10T/610, PA10T/612 and mixtures thereof;
or
the polyamide of component (D) is selected from the group consisting of PA6, PA66, PA6/66, PA6T/6I, PA6T/66, PA6T/10T, PA10T/612 and mixtures thereof, preferably as PA66, or of mixtures of PA66 and PA6T/6I;
and/or
the filler (E) is selected from the group consisting of ground glass, glass fibres of round cross-section, glass fibres of flat cross-section and mixtures thereof.

11. A gear wheel according to Claim 9, **characterised in that**
component (D) of the polyamide moulding compound (II) is selected from the group consisting of PA66 and PA6I/6T, in particular amorphous PA6I/6T, particularly preferably with a molar ratio 6I:6T of 70:30 and mixtures thereof, with PA66 being particularly preferred; and/or
component (F) of the polyamide moulding compound (II) is selected from the group consisting of calcium stearate, heat stabilisers, in particular copper stabilisers and mixtures thereof.

12. A gear wheel according to one of the preceding claims, **characterised in that**
the gear wheel in addition to the gearing region (1) and the core or shell region (2) also has a further layer (4) which is preferably formed from a thermoplastic which is preferably selected from the group consisting of polyamide, polycarbonate, polystyrene, polymethyl methacrylate, acrylonitrile/butadiene/styrene copolymer, acrylonitrile/styrene copolymer, polyolefin, polyoxymethylene, polyester, in particular polyethylene terephthalate, polybutylene terephthalate, polysulphone, PSU, PESU or PPSU, polyphenylene ether, polyphenylene sulphide, polyphenylene oxide, liquid-crystalline polymers, polyether ketone, polyether ether ketone, polyimide, polyamide imide, polyester imide, polyether amide, polyester amide, polyether ester amide, polyurethane, in particular TPU or PU, polysiloxane, polyacrylate, polymethacrylate and also mixtures or copolymers based on such systems and mixtures thereof.

13. A gear wheel according to one of the preceding claims, **characterised in that**
the gear wheel has from 5 to 100, preferably 20 to 80 and particularly preferably from 55 to 66, teeth; and/or
the module (normal module, transverse module, axial module) of the gear wheel is from 0.1 to 10 mm, preferably 0.5 to 5 mm, and particularly preferably from 1 to 3 mm; and/or
the tooth-space width is from 1 to 20 mm, preferably from 2 to 15 mm, and particularly preferably from 4 to 12 mm.

14. A method for producing a gear wheel according to one of Claims 1 to 13, wherein it is a multi-component injection-moulding method or a coextrusion method.

15. Use of a gear wheel according to one of Claims 1 to 13 in bearing shells, guide bushes, bearing housings for gearboxes, door or window handles, worm gears of an electric actuator in a power steering system of a motor vehicle, comfort drives in a motor vehicle.

## Revendications

1. Roue dentée contenant un mélange à mouler de polyamides (I) ou consistant en ce mélange à mouler de polyamides, le mélange à mouler de polyamides (I) contenant les composants (A) à (C) ci-après, ou en étant formé :
(A) 35 à 100 % en poids d'un mélange formé des polyamides (A1) et (A2) ; à savoir
(A1) 50 à 100 % en poids d'au moins un polyamide contenant 50 % en moles de motifs PA X.16, X représentant une diamine aliphatique acyclique ayant 4 à 12 atomes de carbone et 16 représentant l'acide 1,16-hexadécanedioïque ; et
(A2) 0 à 50 % en poids d'au moins un polyamide aliphatique ou partiellement aromatique, qui est différent du composant (A1) ;
la somme de (A1) et de (A2) étant égale à 100 % en poids ;
(B) 0 à 60 % en poids d'au moins une charge ;
(C) 0 à 5 % en poids d'au moins un additif ;
les proportions en poids des composants (A) à (C) s'additionnant pour former 100 % en poids.

2. Roue dentée selon la revendication 1, **caractérisée en ce que**
la roue dentée présente une zone d'engrènement (1) et une zone de cœur ou de coquille (2) ;
la zone d'engrènement complète (1) ou au moins une partie de celle-ci étant constituée d'un mélange à mouler de polyamides (I), auquel cas, quand seulement une partie de la zone d'engrènement (1) est constituée du mélange à mouler de polyamides (I), il est préférable que cette partie soit conçue comme une couche d'usure (3), qui s'étend sur la face extérieure de la zone d'engrènement (1) ; et
la zone de cœur ou de coquille (2) contient le mélange à mouler de polyamides (I) ou un mélange à mouler de polyamides (II) différent du mélange à mouler de polyamides (I), ou en est constitué, auquel cas il est préférable que la zone de cœur ou de coquille soit constituée du mélange à mouler de polyamides (II).

3. Roue dentée selon l'une des revendications précédentes, **caractérisée en ce que** le composant (A1)
est constitué d'au moins un polyamide, contenant 60 % en moles ou 80 % en moles et de préférence 100 % en moles d'au moins un motif polyamide X.16, X représentant une diamine aliphatique acyclique ayant 4 à 12 atomes de carbone et 16 l'acide 1,16-hexadécanedioïque ;
ou
est choisi dans le groupe consistant en PA1016, P1916, PA516, PA616, PA516/616, PA616/916, PA616/1016, PA616/618 et les mélanges de ceux-ci ;
ou
est choisi dans le groupe consistant en PA616, PA516, PA916, PA1016, PA516/616, PA616/1016 et les mélanges de ceux-ci, PA 616 étant particulièrement préféré.

4. Roue dentée selon l'une des revendications précédentes, **caractérisée en ce que**
le composant (A) est constitué
du composant (A1) à raison de 50 à 90 % en poids, de préférence de 60 à 85 % en poids, et du composant (A2) à raison de 10 à 50 % en poids, de préférence de 15 à 40 % en poids ; la somme de (A1) et de (A2) étant égale à 100 % en poids de (A) ; et/ou
la proportion du composant (A) dans le mélange à mouler de polyamides (I) est comprise dans la plage de 47 à 90 % en poids, de préférence de 58 à 79,9 % en poids et d'une manière particulièrement préférée de 63 à 74,9 % en poids, par rapport au poids total des composants (A) à (C), et/ou
la proportion du composant (B) dans le mélange à mouler de polyamides (I) est comprise dans la plage de 10 à 50 % en poids, de préférence de 20 à 40 % en poids et d'une manière particulièrement préférée de 22 à 37 % en poids, par rapport au poids total des composants (A) à (C), et/ou
la proportion du composant (C) dans le mélange à mouler de polyamides (I) est comprise dans la plage de 0 à 3 % en poids et de préférence de 0,1 à 2,0 % en poids, par rapport au poids total des composants (A) à (C).

5. Roue dentée selon l'une des revendications précédentes, **caractérisée en ce que** le composant (A2)
est un polyamide aliphatique ou partiellement aromatique formé de diamines aliphatiques ayant 4 à 12, de préférence 6 à 10 atomes de carbone, d'acides dicarboxyliques aliphatiques ayant 6 à 12, de préférence 6 à 10 atomes de carbone et d'acides dicarboxyliques aromatiques, en particulier l'acide téréphtalique et l'acide isophtalique ; ou
est choisi dans le groupe consistant en PA6, PA46, PA56, PA66, PA6/66, PA69, PA610, PA612, PA96, PA910, PA106, PA109, PA6T/66, PA6T/6I, PA6T/6I/610, PA6T/6I/612, PA6T/6I/614, PA6T/6I/616, PA6T/DT (D = 2-méthylpentan-1,5-diamine), PA6T/6I/66, PA6T/6, PA6T/10T, PA9T, PA9T/MT (MT = 2-méthyloctane-1,8-diamine), PA10T, PA12T, PA10T/610, PA10T/612, PA10T/614, PA10T/616, PA10T/618, PA10T/916, PA10T/1016 et les mélanges de ceux-ci ; ou est choisi dans le groupe consistant en PA66, PA610, PA612n PA106, PA6T/6I, PA6T/6I/610, PA6T/6I/612, PA6T/6I/614, PA6T/6I/616, PA6T/10T, PA10T/610, PA10T/612, PA10T/614, PA10T/616, PA10T/618, PA10T/1016 et les mélanges de ceux-ci ; ou le composant (A2) est choisi dans le groupe consistant en PA610, PA612, PA10T/1016, PA10T/612 et le mélanges de ceux-ci.

6. Roue dentée selon l'une des revendications 1 à 5, **caractérisée en ce que**
le composant (B) est fibreux ou particulaire et est de préférence choisi parmi les fibres de verre ou les billes de verre et les mélanges de celles-ci, les fibres de verre étant particulièrement préférées, et le type de verre de la charge du verre (B) étant choisi parmi le verre E, le verre ECR, le verre S, le verre A, le verre AR, le verre R et les mélanges de ceux-ci.

7. Roue dentée selon l'une des revendications 1 à 6, **caractérisée en ce que**
le composant (C) est choisi dans le groupe consistant en les lubrifiants, les stabilisants thermiques, les stabilisants de mise en œuvre, les retardateurs d'oxydation, les auxiliaires de mise en œuvre, les agents modifiant la viscosité, les agents contre une décomposition thermique et une décomposition sous l'effet de la lumière ultraviolette, les agents de glissement et de démoulage, les substances colorantes, en particulier les colorants et les pigments, les agents de nucléation, les plastifiants, les pigments inorganiques, les pigments organiques et les mélanges de ceux-ci, les lubrifiants étant présents de préférence en une quantité de 0 à 2 % en poids, d'une manière particulièrement préférée de 0,05 à 2,0 % en poids, en particulier de préférence de 0,1 à 1,5 % en poids et tout spécialement de 0,1 à 1,0 % en poids, et les stabilisants thermiques étant présents de préférence en une quantité de 0 à 3 % en poids, d'une manière particulièrement préférée de 0,02 à 2,0 % en poids et en particulier de préférence de 0,1 à 1,5 % en poids, dans chaque cas par rapport au poids total des composants (A) à (C).

8. Roue dentée selon l'une des revendications 1 à 7, **caractérisée en ce que** le mélange à mouler de polyamides (I) présente
une résistance à la rupture, déterminée selon ISO 527, d'au moins 50 MPa, de préférence d'au moins 80 MPa et d'une manière particulièrement préférée d'au moins 100 MPa ; et/ou
un allongement à la rupture, déterminé selon ISO 527, d'au moins 4 %, de préférence d'au moins 5 % et d'une manière particulièrement préférée d'au moins 6 % ; et/ou
un module d'élasticité en traction, déterminé selon ISO 527, d'au moins 1000 MPa, de préférence d'au moins 4000 MPa et d'une manière particulièrement préférée d'au moins 6000 MPa ; et/ou
une résistance au choc Charpy à 23 °C, déterminée selon ISO 179/2eU, d'au moins 60 kJ/m², de préférence d'au moins 70 kJ/m² et d'une manière particulièrement préférée d'au moins 80 kJ/m² ; et/ou
une abrasion, déterminée sur une partie éloignée de la carotte d'une éprouvette de traction ISO (type A1, dimensions 170 x 20/10 x4), qui est déplacée sur une plaque d'acier à une vitesse de 3 m/min à 23 °C (surface d'appui 20 x 4 mm²) au bout de 8 heures, au maximum de 1 mg, de préférence au maximum de 0,9 mg et d'une manière particulièrement préférée au maximum de 0,8 mg.

9. Roue dentée selon l'une des revendications 2 à 8, **caractérisée en ce que**
le mélange à mouler de polyamides (II) contient les composants (D) à (F) ci-après et de préférence en est constitué ;
(D) 35 à 100 % en poids d'au moins un polyamide aliphatique ou partiellement aromatique, de préférence formé de diamines aliphatiques ayant 4 à 12, d'une manière particulièrement préférée 6 à 10 atomes de carbone, d'acides dicarboxyliques aliphatiques ayant 6 à 12, de préférence 6 à 10 atomes de carbone et d'acides dicarboxyliques aromatiques, en particulier l'acide téréphtalique et l'acide isophtalique ;
(E) 0 à 60 % en poids d'au moins une charge ;
(F) 0 à 5 % en poids d'au moins un additif ;
les proportions en poids des composants (D) à (F) s'additionnant pour donner 100 % en poids.

10. Roue dentée selon la revendication 9, **caractérisée en ce que**
le polyamide du composant (D) est choisi dans le groupe consistant en PA6, PA66, PA6/66, PA46, PA56, PA510, PA610, PA612, PA6T/6I, PA6T/66, PA6T/10T, PA9T, PA9T/MT (M = méthyloctane-1,8-diamine), PA10T, PA11/10T, PA12/10T, PA10T/66, PA10T/106, PA10T/610, PA10T/612 et les mélanges de ceux-ci ;
ou
le polyamide du composant (D) est choisi dans le groupe consistant en PA6, PA66, PA6/66, PA6T/6I, PA6T/66, PA6T/10T, PA10T/612 et les mélanges de ceux-ci, de préférence sous forme de PA66, ou parmi les mélanges de PA66 et de PA6T/6I ;
et/ou
la charge (E) est choisie dans le groupe consistant en le verre moulu, les fibres de verre de section transversale circulaire, les fibres de verre de section transversale plate, et les mélanges de ceux-ci.

11. Roue dentée selon la revendication 9, **caractérisée en ce que**
le composant (D) du mélange à mouler de polyamides (II) est choisi dans le groupe consistant en PA66 et PA 6I/6T, en particulier PA 6I/6T amorphe, d'une manière particulièrement préférée avec un rapport en moles 6I:6T de 70:30 et les mélanges de ceux-ci, PA66 étant particulièrement préféré ;
et/ou
le composant (F) du mélange à mouler de polyamides (II) est choisi dans le groupe consistant en le stéarate de calcium, les stabilisants thermiques, en particulier les stabilisants au cuivre et les mélanges de ceux-ci.

12. Roue dentée selon l'une des revendications précédentes, **caractérisée en ce que**
la roue dentée présente, en plus de la zone d'engrènement (1) et la zone de cœur ou de coquille (2), encore une couche supplémentaire (4), qui de préférence est formée d'un plastique thermoplastique, qui de préférence est choisi dans le groupe consistant en le polyamide, le polycarbonate, le polystyrène, le poly(méthacrylate de méthyle), un copolymère acrylonitrile-butadiène-styrène, un copolymère acrylonitrile-styrène, une polyoléfine, le polyoxyméthylène, un polyester, en particulier le poly(téréphtalate d'éthylène), le poly(téréphtalate de butylène), la polysulfone, le PSU, le PESU ou le PPSU, le poly(phénylène éther), le poly(sulfure de phénylène), le poly(oxyde de phénylène), les polymères cristallins liquides, la polyéthercétone, la polyétheréthercétone, un polyimide, un polyamide-imide, un polyesterimide, un polyétheramide, un polyesteramide, un polyétheresteramide, un polyuréthanne, en particulier le TPU ou le PUR, un polysiloxane, un polyacrylate, un polyméthacrylate, ainsi que les mélanges ou copolymères à base de ces systèmes, et de mélanges de ceux-ci.

13. Roue dentée selon l'une des revendications précédentes, **caractérisée en ce que**
la roue dentée présente 5 à 100, de préférence 20 à 80 et d'une manière particulièrement préférée 55 à 66 dents ; et/ou
le module (normal, réel, axial) de la roue dentée est de 0,1 à 10 mm, de préférence de 0,5 à 5 mm, et d'une manière particulièrement préférée de 1 à 3 mm ; et/ou
la largeur des dents est de 1 à 20 mm, de préférence de 2 à 15 mm et d'une manière particulièrement préférée de 4 à 12 mm.

14. Procédé de fabrication d'une roue dentée selon l'une des revendications 1 à 13, pour ce qui concerne lequel il s'agit d'un procédé de moulage par injection multimatériaux ou d'un procédé par coextrusion.

15. Utilisation d'une roue dentée selon l'une des revendications 1 à 13 dans des coquilles de coussinet, des manchons de guidage, des logements de palier pour engrenages, des poignées de porte ou de fenêtre, des engrenages à vis sans fin d'un actionneur électrique dans une direction assistée d'un véhicule à moteur, des transmissions de confort dans un véhicule à moteur.
